# EUROPÄISCHE PATENTSCHRIFT

(11) **EP 2 957 466 B1**
(45) Veröffentlichungstag und Bekanntmachung des Hinweises auf die Patenterteilung: **19.12.2018**
(21) Anmeldenummer: 15167497.5
(22) Anmeldetag: 13.05.2015
(51) Int. Cl.: B60R 11/04

(54) **ANORDNUNG FÜR EIN FAHRZEUG**
ASSEMBLY FOR A VEHICLE
AGENCEMENT POUR UN VÉHICULE

(30) Priorität: 13.06.2014 DE 102014108378; 11.07.2014 DE 102014109738
(43) Veröffentlichungstag der Anmeldung: 23.12.2015
(73) Patentinhaber: Huf Hülsbeck & Fürst GmbH & Co. KG, 42551 Velbert (DE)
(72) Erfinder: Barthel, Joachim, 45329 Essen (DE); Wietkamp, Stephan, 48161 Münster (DE)
(74) Vertreter: Zenz Patentanwälte Partnerschaft mbB

(56) Entgegenhaltungen:
- EP-A1- 1 529 688
- EP-A1- 2 508 393
- EP-A2- 2 525 029
- DE-A1- 10 204 764
- DE-A1-102006 023 103
- DE-A1-102006 039 192

## Beschreibung

Die Erfindung richtet sich auf eine Kombination von einem Fahrzeug und einer Anordnung, insbesondere eine KameraAnordnung, wobei die Anordnung ein Trägergehäuse, das in einem Durchbruch einer Außenverkleidung des Fahrzeugs angeordnet und dort befestigt ist und das eine Durchgangsöffnung aufweist, eine Antriebseinheit, die rückseitig an dem Trägergehäuse angebracht ist, eine bewegbar gelagerten Kameraeinheit, die mit Hilfe der Antriebseinheit wenigstens zwischen einer zurückgezogenen Ruheposition und einer Aktivposition, in welcher zumindest das Objektiv der Kameraeinheit aus der Durchgangsöffnung des Trägergehäuses nach außen hervorsteht und zu der Bewegungsrichtung der Kameraeinheit geneigt ausgerichtet ist, bewegbar ist, eine bewegbar an dem Trägergehäuse gelagerte Schutzklappe, die zwischen einer Schließstellung, in welcher sie die Durchgangsöffnung des Trägergehäuses verschließt und in welcher die Kameraeinheit von außen hinter der Schutzklappe angeordnet ist, und einer Offenstellung, in welcher sie die Durchgangsöffnung des Trägergehäuses freigibt, bewegbar ist, umfasst, wobei ein mit der Antriebseinheit bewegungsgekoppeltes Betätigungselement vorgesehen ist, das bei Rückwärtsfahrt des Fahrzeugs und in der Aktivposition der Kameraeinheit die Schutzklappe in ihre Offenstellung drängt.

Für ein sicheres Rückwärtseinparken ist die Beobachtung des rückwärtigen Raumes hinter dem Fahrzeug unerlässlich. Die Rückspiegel liefern dem Fahrzeugführer hierbei nur einen unzureichenden Beobachtungsbereich, da die Rückspiegel keinen Blick in sogenannte tote Winkel ermöglichen. Durch eine Kameraeinheit werden Bilder auch von Bereichen, die von dem Fahrzeugführer nicht mit den Rückspiegeln einsehbar sind, auf einem im Fahrzeuginnenraum angeordneten Bildschirm angezeigt, so dass der Fahrzeugführer einen nahezu vollständigen Überblick über den Bereich hat, in den das Fahrzeug beim Rückwärtseinparken sich bewegen soll. Vorrichtungen mit einer Kameraeinheit, die zur Bilderfassung des Außenbereiches eines Fahrzeugs dienen, sind aus dem Stand der Technik bereits bekannt. Derartige Vorrichtungen umfassen ein Gehäuse, in dem die Kameraeinheit zwischen einer Rückzugstellung und einer Betriebsposition beweglich aufgenommen ist. Beispielsweise kommen wie vorstehend angesprochen derartige Kameraeinheiten im Bereich des assistierten Einparkens von Fahrzeugen zum Einsatz. Wird beispielsweise der Rückwärtsgang des Fahrzeugs eingelegt, verfährt die Kameraeinheit aus der Rückzugstellung in die Betriebsposition, wobei die Kameraeinheit wenigstens teilweise aus dem Gehäuse herausgefahren wird. Dadurch wird der Bereich hinter dem Kraftfahrzeug durch die Kameraeinheit bildlich erfasst und auf einem Display für den Fahrer angezeigt. Ist die Rückwärtsfahrt beendet und nimmt der Fahrer des Fahrzeugs den Rückwärtsgang wieder heraus, kann die Kameraeinheit von der Betriebsposition wieder zurück in die Rückzugstellung verschwenken.

Eine Anordnung der Eingangs bezeichneten Art ist zum Beispiel aus der DE 102 04 764 A1 bekannt. Die Anordnung der Kameraeinheit in der nicht aktiven Position hinter einem Schutzelement bzw. einer Schutzklappe hat den Vorteil, dass die Kameraeinheit und insbesondere das Objektiv der Kameraeinheit vor Schmutz und Feuchtigkeit geschützt sind. Bei der Anordnung entsprechend der DE 102 04 764 A1 befindet sich die Kameraeinheit hinter einer Öffnung im Karosserieblech des Fahrzeugs, wobei die Öffnung von der schwenkbaren Schutzklappe verschlossen wird, wenn sich die Kameraeinheit in der nicht aktiven Position befindet. Zur Bilderfassung wird dann die Kameraeinheit über einen Schlitten motorisch linear verschoben, wobei die Schutzklappe über eine Schubstange, die mit der schwenkbaren Schutzklappe und der verschiebbaren Kameraeinheit verbunden ist, infolge der Linearverschiebung der Kameraeinheit hochgeschwenkt wird, so dass die Öffnung freigegeben wird und die Kameraeinheit dann zur Bilderfassung wenigstens teilweise aus der Öffnung herausgefahren wird. Diese Art von bekannter Kameraanordnung ist konstruktiv sehr aufwendig und damit infolge der aufwendigen Verschiebe- und Schwenkmechanik gegenüber Störungen anfällig. Darüber hinaus wird die bekannte Anordnung den gesteigerten Komfortansprüchen der Kunden in der heutigen Zeit nicht mehr gerecht und weist ferner nur die begrenzte Funktionalität einer für den Fahrer visualisierten Ansicht des rückwärtigen Raumes hinter dem Fahrzeug beim Rückwärtsparken auf.

Die EP 1 529 688 A1 zeigt eine Vorrichtung anderer Art, wo die Kameraeinheit drehfest auf der Rückseite eines klappbeweglichen Schutzelements angeordnet ist. Bei der Klappbewegung des Schutzelements wird die Kameraeinheit gleich mit verschwenkt. Die mitbewegliche Kamera erhöht in nachteiliger Weise die Masse des Schutzelements, weshalb größere Drehmomente zu ihrer Klappbewegung erforderlich sind.

Schließlich ist aus der EP 2 525 029 A2 eine an einer Heckklappe eines Fahrzeugs angebrachte Betätigungsvorrichtung bekannt. Die Betätigungsvorrichtung weist einen bewegbaren Träger auf, der durch einen Antrieb zwischen einer ersten Position, in welcher sich der Träger innerhalb des Fahrzeugs befindet und einen Teil der Fahrzeugkarosserie bildet, und einer zweiten Position, in welcher der Träger zumindest bereichsweise aus dem Fahrzeug herausragt und von einem Benutzer als Handhabe betätigbar ist, bewegbar ist. Der Träger umfasst ein Gehäuse, in welchem sich eine Kamera mit einem Kameraantrieb befindet, und eine Außenfläche, welche ein Logo oder eine Grafik aufweisen kann. Dabei kann die Kamera unbeweglich am Träger angebracht sein. Alternativ kann die Kamera eine aktive Lage zur Bilderfassung und eine passive Lage einnehmen. Gemäß einer weiteren Alternative muss sich die Kamera zur Bilderfassung nicht in der aktiven Lage befinden - vielmehr wird ein Schutzelement zur Ermöglichung der Bilderfassung geöffnet.

Der Erfindung liegt die Aufgabe zugrunde eine Lösung zu schaffen, die auf konstruktiv einfache Weise eine Anordnung für ein Fahrzeug bereitstellt, die kostengünstig in ihrer Herstellung ist und bei der der vorstehend genannte Nachteil beseitigt ist. Insbesondere soll eine Anordnung bereitgestellt werden, welche dem Benutzer einen erhöhten Komfort bietet und die Wertigkeit des Fahrzeugs erhöht.

Bei einer Kombination von einem Fahrzeug und einer Anordnung der Eingangs bezeichneten Art wird die Aufgabe erfindungsgemäß dadurch gelöst, dass die Kameraeinheit bei Vorwärtsfahrt des Fahrzeugs eine Kollisionsüberwachungsposition einnimmt, in welcher die Schutzklappe in ihrer Schließstellung angeordnet ist und in welcher die Kameraeinheit an einer in der Schutzklappe ausgebildeten Überwachungsöffnung zum Filmen des nachfolgenden oder vorausfahrenden Verkehrs angeordnet ist, wobei das Objektiv der Kameraeinheit in der Kollisionsüberwachungsposition horizontal ausgerichtet ist. Dabei ist das Objektiv der Kameraeinheit in der Kollisionsüberwachungsposition in Bewegungsrichtung der Kamera ausgerichtet und nicht geneigt, wie in der Aktivposition. Die in der Schutzklappe ausgebildet Überwachungsöffnung ist ein Durchgangsloch mit einer einer transparenten Abdeckung, damit die hinter der Schutzklappe angeordnete Kameraeinheit durch das Durchgangsloch freie Sicht nach außen hat und dennoch kein Schmutz von außen eindringen kann.

Vorteilhafte und zweckmäßige Ausgestaltungen und Weiterbildungen der Erfindung ergeben sich aus den Unteransprüchen.

Durch die Erfindung wird eine Kombination von einer Anordnung und einem Fahrzeug zur Verfügung gestellt, die sich durch eine funktionsgerechte Konstruktion auszeichnet. Eine derartige Anordnung für ein Fahrzeug mit einer bewegbar gelagerten Kameraeinheit ist einfach und kostengünstig ausgebildet und gewährleistet in der Schließstellung der Schutzklappe einen sicheren Schutz der Kameraeinheit vor äußeren Einflüssen, wie zum Beispiel Schmutz, Stößen oder Schlägen. Da die Kameraeinheit erfindungsgemäß auch eine Kollisionsüberwachungsposition einnehmen kann, bei welcher die Schutzklappe in ihrer Schließstellung angeordnet ist und das Objektiv der Kameraeinheit durch die Überwachungsöffnung hindurch dennoch den Verkehr filmen kann, dient die Kameraeinheit nicht nur als Einparkhilfe sondern auch als Teil einer vorausschauenden Sensorik (Pre-Crash-Sensorik) eines Insassenschutzsystems, welche potentielle Gefahrensituationen schon vor Eintritt eines Unfalls erkennt. Das frühzeitige Erkennen gestattet es, durch Eingriff in das Brems-, Antriebs- und/oder Lenkungssystem, durch Anordnung von Sitzen und Kopfstützen in eine crashoptimierte Position sowie durch Straffung der Gurte eine bevorstehende Kollision abzuwenden oder zumindest abzumildern. Während in der Aktivposition zumindest das Objektiv der Kameraeinheit aus der Durchgangsöffnung des Trägergehäuses nach außen hervorsteht und zu der Bewegungsrichtung der Kameraeinheit geneigt ausgerichtet ist, um den Bereich sowie den Boden vor der Stoßstange des Fahrzeugs für den Fahrzeugführer zu visualisieren, ist das Objektiv der Kameraeinheit in der Kollisionsüberwachungsposition nicht geneigt, sondern im Wesentlichen horizontal ausgerichtet angeordnet, um den nachfolgenden (oder im Fall einer Frontkamera auch den vorausfahrenden) Verkehr zu filmen. Durch die erfindungsgemäße Anordnung erhöht sich folglich die Funktionalität, denn die Anordnung ist nun als Einparkhilfe und auch als Insassenschutzsystem verwendbar. Die Überwachungsöffnung kann eine transparente Scheibe aufweisen, so dass die Kameraeinheit hinter der Schutzklappe sicher angeordnet ist.

Zur Erhöhung des Komforts und der Funktionalität der Anordnung sieht die Erfindung in Ausgestaltung vor, dass die Kameraeinheit ferner zwischen einer Einfahrposition und einer einer Vorfeldbeleuchtung des Fahrzeugs dienenden Komfortposition, in welcher die Schutzklappe in ihrer Offenstellung angeordnet ist, bewegbar ist, wobei die Kameraeinheit in der Einfahrposition weiter von der Schutzklappe entfernt als in der Kollisionsüberwachungsposition angeordnet ist, und wobei in der Komfortposition die Kameraeinheit zwischen der Kollisionsüberwachungsposition und der Einfahrposition angeordnet ist. Beispielsweise ist die Antriebseinheit derart ausgebildet, dass sie die Kameraeinheit der Reihe nach zwischen einer Aktivposition, einer Kollisionsüberwachungsposition, einer Komfortposition und einer Einfahrposition bewegen kann. In der Komfortposition ist die Kameraeinheit nicht ausgefahren und die Schutzklappe in ihrer Offenstellung angeordnet, so dass auf der Innenseite der Schutzklappe oder innerhalb des Trägergehäuses Beleuchtungselemente angeordnet sein können, welche den Bereich vor dem Trägergehäuse beleuchten. Die Komfortposition kann zum Beispiel von einem Steuergerät initiiert werden, welches ein entsprechendes Signal von einem Benutzer erhält, der sich dem Fahrzeug nähert. Auf diese Weise kann die Beleuchtung oder auch Vorfeldbeleuchtung dem Benutzer eine gewisse Orientierung bei Dunkelheit geben oder das Auffinden des Fahrzeugs in einem Parkhaus erleichtern. Die Beleuchtung kann aber dem Benutzer auch eine Information über den Status seiner Interaktion mit dem Schließ- und Öffnungssystem des Fahrzeugs liefern, so dass der Benutzer durch verschiedenartiges Aufleuchten der Beleuchtung erkennt, dass zum Beispiel die Tür entriegelt ist oder eine Klappe automatisch öffnen wird.

In Ausgestaltung der erfindungsgemäßen Anordnung für ein Fahrzeug ist vorgesehen, dass die Komfortposition von der Kameraeinheit nur bei vorheriger Bewegung in die Einfahrposition einnehmbar ist. Eine Bewegung der Kameraeinheit in eine Position, die rückwärtig zu der Komfortposition angeordnet ist, bewirkt eine mechanische Verstellung der Anordnung, wodurch es möglich ist, dass die Schutzklappe in ihrer Offenstellung angeordnet ist, sich die Kameraeinheit aber nicht ausgefahren in ihrer Aktivstellung sondern in ihrer in Bezug auf die Aktivstellung in das Trägergehäuse zurückgezogenen Komfortstellung befindet.

Eine konstruktiv besonders einfache Möglichkeit zur Realisierung der gewünschten Bewegungsmechanik und Bewegungskopplung von Kameraeinheit und Schutzklappe ist in Ausgestaltung der Erfindung dadurch gegeben, dass das Betätigungselement als ein Steuerzapfen an der Kameraeinheit ausgebildet ist und ein mit der Schutzklappe in Wirkverbindung stehender und bewegbar am Trägergehäuse gelagerter Stößel eine erste Anlagefläche aufweist, wobei bei einer Bewegung der Kameraeinheit aus der Kollisionsüberwachungsposition in die Aktivposition der Steuerzapfen an der ersten Anlagefläche anliegt und die erste Anlagefläche derart in Richtung der Durchgangsöffnung drückt, dass der Stößel die Schutzklappe in ihre Offenstellung drängt.

Zur Vermeidung eines zusätzlichen Antriebs, damit die Schutzklappe für unterschiedliche Positionen der Kameraeinheit dennoch in ihrer Offenstellung angeordnet sein kann, sieht die Erfindung als mechanische Ausgestaltung vor, dass an dem der Schutzklappe abgewandten Längsende des Stößels ein Distanzstück mit einer zweiten Anlagefläche drehbar angebracht ist, wobei die zweite Anlagefläche auf der der Schutzklappe abgewandten Seite der ersten Anlagefläche und in einem Abstand zur ersten Anlagefläche angeordnet ist, wobei in der Komfortposition und in der Einfahrposition das als Steuerzapfen ausgebildete Betätigungselement an der zweiten Anlagefläche des Distanzstücks anliegt und die zweite Anlagefläche derart in Richtung der Durchgangsöffnung drückt, dass der Stößel die Schutzklappe in ihre Offenstellung drängt. Das Distanzstück dient folglich als eine Art Verlängerung, welches es der Kameraeinheit erlaubt, trotz weiter zurückgezogener Position nach wie vor den Stößel zu betätigen und derart in Richtung der Schutzklappe zu drängen, dass der Stößel die Schutzklappe aufdrückt, obgleich die Kameraeinheit zurückgezogen im Trägergehäuse angeordnet ist. Da auf diese Weise der Stößel die Schutzklappe sowohl in der Komfortposition als auch in der Aktivposition aufdrückt, ist nur die Antriebseinheit für die Kameraeinheit erforderlich und ein Antrieb zum Aufdrücken der Schutzklappe kann entfallen.

Zur Realisierung der gewünschten Bewegungsmechanik, damit die Kameraeinheit zwar die Schutzklappe aufdrückt, jedoch nicht aus der Durchgangsöffnung hervorsteht, ist in Ausgestaltung vorgesehen, dass bei einer von der Schutzklappe weg gerichteten Bewegung der Kameraeinheit aus der Kollisionsüberwachungsposition in die Einfahrposition der Steuerzapfen das Distanzstück derart aus seinem Bewegungsweg drückt und schwenkt, dass der Steuerzapfen an die der Schutzklappe abgewandte Seite der zweiten Anlagefläche gelangt und an dieser anliegt. Wenn der Steuerzapfen an der zweiten Anlagefläche anliegt, dann führt eine Bewegung der Kameraeinheit in Richtung der Schutzklappe dazu, dass die Komfortposition überhaupt eingenommen werden kann, d.h. dass die Schutzklappe in der Offenstellung und die Kameraeinheit in einer zurückgezogenen Position in dem Trägergehäuse angeordnet sind.

Um den Steuerzapfen wieder in eine Lage zu bringen, in welcher er nicht mehr an der zweiten Anlagefläche (für die Komfortposition) sondern an der ersten Anlagefläche (für die Aktivposition und die Kollisionsüberwachungsposition) anliegt, damit die Kameraeinheit zum Beispiel wieder ihre Aktivposition als Einparkhilfe einnehmen kann, sieht die Erfindung in weiterer Ausgestaltung vor, dass bei einer zu der Schutzklappe hin gerichteten Bewegung der Kameraeinheit aus der Komfortposition in die Kollisionsüberwachungsposition eine Gehäuseführung einen an dem Distanzstück angebrachten Rückstellzapfen derart führt, dass sich die zweite Anlagefläche des Distanzstücks aus dem Bewegungsweg des Steuerzapfens bewegt und der Steuerzapfen in Anlage an die erste Anlagefläche kommt.

Die Möglichkeit, dass der Rückstellzapfen die zweite Anlagefläche des Distanzstücks aus dem Bewegungsweg des Steuerzapfens bewegt, ist mit einer unerwünschten Geräuschentwicklung verbunden, weil das Distanzstück zurückschwingt und dessen zweite Anlagefläche nicht mehr gedrückt ist, wenn das Distanzstück den Rückstellzapfen passiert hat, wodurch der mit dem Distanzstück gekoppelte Stößel von der Schutzklappe zurückgedrängt wird, weil die Schutzklappe selbst wiederum federbelastet und in Richtung ihrer Schließstellung von einem Federelement kraftbeaufschlagt ist. Um ein solches unerwünschtes Geräusch zu vermeiden, sieht die Erfindung in weiterer Ausgestaltung vor, dass eine Antriebsvorrichtung mit dem Distanzstück bewegungsgekoppelt ist und dessen zweite Anlagefläche bei einer zu der Schutzklappe hin gerichteten Bewegung der Kameraeinheit aus der Komfortposition in die Kollisionsüberwachungsposition aus dem Bewegungsweg des Steuerzapfens bewegt. Die Bewegung der zweiten Anlagefläche des Distanzstücks aus dem Bewegungsweg des Steuerzapfens und in dessen Bewegungsweg hinein erfolgt somit kontrolliert, wodurch unerwünschte Geräusche unterbunden werden, weil keine schlagartige Bauteilberührung mehr stattfindet.

Eine konstruktiv besonders günstige Möglichkeit der Realisierung einer geräuschlosen Bewegung des Distanzstückes ist in Ausgestaltung der Erfindung dadurch gegeben, dass die Antriebsvorrichtung an dem Trägergehäuse oder dem Kameragehäuse angebracht ist und ein Koppelelement die Antriebsvorrichtung derart mit dem Distanzstück verbindet, dass das Distanzstück um einen Bewegungszapfen des Stößels verschwenkt werden kann.

In weiterer Ausgestaltung der Erfindung sieht diese vor, dass die Antriebsvorrichtung, die ein Servomotor oder ein Hubmagnet sein kann, mit dem Betrieb der Antriebseinheit der Kameraeinheit steuerungsgekoppelt ist. Die Steuerungskopplung setzt die Antriebsvorrichtung in Abhängigkeit der Position der Kameraeinheit und/oder des Steuerzapfens in Betrieb und ist derart ausgebildet, dass sie das Distanzstück und dessen zweite Anlagefläche dann aus dem Bewegungsweg des Steuerzapfens schwenkt, wenn sich die Kameraeinheit aus der Komfortposition in die Kollisionsüberwachungsposition bewegt, wobei die Kameraeinheit nicht in den Positionen selbst angeordnet sein sondern lediglich diese Positionen durchlaufen muss.

Zum Schutz und zur Führung der Kameraeinheit sieht die Erfindung in weiterer Ausgestaltung vor, dass sich in Verlängerung der Durchgangsöffnung ein an dem Trägergehäuse angebrachtes Aufnahmegehäuse erstreckt, in welchem die Kameraeinheit zumindest zwischen ihrer Aktivposition und Ruheposition verfahrbar gelagert ist. Dabei können das Trägergehäuse und das Aufnahmegehäuse einstückig hergestellt sein, was aber zur Realisierung der erfindungsgemäßen Vorteile nicht notwendig ist.

Eine konstruktiv besonders einfache Möglichkeit, die Bewegung der Kameraeinheit zu führen, ist in Ausgestaltung der Erfindung dadurch gegeben, dass die Kameraeinheit wenigstens ein Zapfenelement aufweist, welches in einer komplementären Führungsnut in dem Aufnahmegehäuse bewegungsgeführt ist. Die Führung der Kameraeinheit erfolgt quasi nach Art einer Kulissenführung, wobei die Führung derart ausgebildet sein kann, dass die Bewegung der Kameraeinheit linear geführt ist. Besonders von Vorteil ist es, wenn das Zapfenelement gleich dem Steuerzapfen ist.

Die Erfindung sieht in weiterer Ausgestaltung vor, dass die Kollisionsüberwachungsposition oder die Einfahrposition die Ruheposition ist. Die Entscheidung darüber, welche der beiden Positionen in der Lage ist, den Stromverbrauch des Antriebs auf ein Minimum zu reduzieren, ist schwer zu treffen. Jedoch wird man aus Komfortgründen die Anordnung derart einrichten und ausbilden, dass die Ruheposition bei geparktem Fahrzeug gleich der Einfahrposition ist. Denn nur aus der Einfahrposition und nicht aber aus der Kollisionsüberwachungsposition gelangt die Kameraeinrichtung direkt in die Komfortstellung, welche im überwiegenden Fall der Fälle die Position sein dürfte, die vor dem Zugang des Fahrzeugführers in das Fahrzeug von Bedeutung ist, um zum Beispiel dem Fahrzeugführer durch eine mit der Komfortposition in Verbindung stehende Vorfeldbeleuchtung eine gewisse Orientierung zu ermöglichen.

Ein besonders platzsparender und einen geringen Bauraum einnehmender Antrieb für die Kameraeinrichtung ist dadurch realisierbar, dass die Antriebseinheit eine sich in Bewegungsrichtung der Kameraeinheit erstreckende Schnecke antreibt, die mit einem ersten Ende eines Hebelelements sowohl gelenkig verbunden als auch bewegungsgekoppelt ist, wobei das zweite Ende des Hebelelements mit der Kameraeinheit gelenkig verbunden ist. Dabei ermöglicht die gelenkige Verbindung ein Verschwenken der Kameraeinheit, insbesondere wenn diese mit ihrem Objektiv geneigt zur Bewegungsrichtung in ihrer Aktivposition angeordnet ist.

Zur Rückstellung und Rückhaltung des Stößels in seiner Grundstellung, in welcher er nicht die Schutzklappe in Offenstellung drängt, ist eine mechanisch einfache Möglichkeit in Ausgestaltung der Erfindung dadurch gegeben, dass der Stößel gegen die Kraft eines Federelements in Richtung des Trägergehäuses bewegbar ist.

Gemäß einer weiteren Ausgestaltung der erfindungsgemäßen Anordnung weist die Schutzklappe eine Leiterplatte auf, die eine Lichtquelle zur Vorfeldbeleuchtung in Offenstellung Schutzklappe und/oder zur Beleuchtung eines außenseitig an der Schutzklappe angebrachten Fahrzeugfirmenemblems aufweist. Die Leiterplatte kann eine Beleuchtungsmöglichkeit für den Außenbereich des Fahrzeugs bei Dunkelheit, aber auch eine Hinterleuchtung des Fahrzeugfirmenemblems ermöglichen, wozu an der deckelförmig ausgebildeten Handhabe zusätzlich zu dem Fahrzeugfirmenemblem und der Leiterplatte mit der Lichtquelle ferner eine Lichtverteileinrichtung vorgesehen sein kann.

In Ausgestaltung der Erfindung ist vorgesehen, dass ein elektrisch leitendes Federelement zwischen der Schutzklappe und dem Trägergehäuse angeordnet ist, welches die Leiterplatte mit einem fahrzeugseitigen Leitungselement elektrisch verbindet und das eine die Schutzklappe in die Schließstellung drängende Rückstellkraft aufbringt. Durch das Federelement ist ein Antriebselement zur Rückstellung der Schutzklappe in ihre Schließstellung entbehrlich, so dass die Kosten der Anordnung insgesamt reduziert werden können. Das elektrisch leitende Federelement dient der Übertragung von Energie zur Stromversorgung und/oder der Übertragung von Informationen zwischen dem Fahrzeug und der Leiterplatte. Dadurch ist es möglich, die Funktionalität der Schutzklappe und der Anordnung insgesamt zu erhöhen, denn die Schutzklappe kann nun beispielsweise eine Beleuchtungsmöglichkeit oder einen Sensor zur Erkennung der Annäherung eines Benutzers aufweisen. Das fahrzeugseitige Leitungselement kann in der einfachsten Form beispielsweise ein Stecker sein, der an eine an dem Gehäuse ausgebildete Aufnahme eingesteckt wird, so dass der fahrzeugseitige Stecker dann über das elektrisch leitende Federelement mit der Leiterplatte verbunden ist.

Schließlich sieht die Erfindung in Weiterbildung vor, dass die Schutzklappe eine Handhabe zum Öffnen einer Klappe des Fahrzeugs ist und die Leiterplatte einen Annäherungssensor zur Erfassung einer Annäherung eines Benutzerkörperteils aufweist, wobei die Handhabe derart drehbar an dem Trägergehäuse gelagert ist, dass sie aus der Schließstellung in die Offenstellung schwenkbar ist, in der ein Hintergreifen der Handhabe durch einen Benutzer zu deren Betätigung möglich ist. Bei dieser Ausgestaltung dient die Handhabe nur im Notfall als Handhabe im eigentlichen Sinne, denn primär dient die Handhabe mit der darin integrierten Leiterplatte mit Annäherungssensor dazu, eine Annäherung eines Körperteils eines Benutzers zu sensieren, um dann, wenn das Körperteil nahe genug in die Nähe der Handhabe geführt wird und zusätzlich ein entsprechendes Signal von einem berechtigten ID-Geber an das Kraftfahrzeug übermittelt wird, die Klappe berührungslos zu öffnen. Weiterhin ist es von Vorteil, wenn der Annäherungssensor als kapazitiver Sensor ausgebildet ist. Alternativ zu einem kapazitiven Sensor kann auch ein induktiver Sensor verwendet werden. Beide Sensortypen sind im Markt verfügbar und mit entsprechenden Schaltvorschriften versehen. Kapazitive Sensoren können außerdem durch Metallflächen gebildet werden, die mit einer geeigneten Ladeelektronik gekoppelt sind. Der Erfassungsbereich des Sensors erstreckt sich durch die davor, zum Benutzer hin ausgerichteten Komponenten und sensiert kontaktlos die Annäherung eines Benutzerkörperteils. Mit dem Annäherungssensor ist eine Steuer- und Auswerteschaltung gekoppelt, die auf der Leiterplatte angeordnet sein kann. Die Steuer- und Auswerteschaltung steuert den entweder kapazitiven oder induktiven Annäherungssensor in der technisch vorgesehenen Weise an. Entsprechend kann die Leiterplatte eine mit dem Annäherungssensor gekoppelte Steuer- und Auswerteschaltung aufweisen.

Die erfindungsgemäße Anordnung kann demnach eine neuartige Kombination bieten, bei der ein Fahrzeugfirmenemblem optisch gekennzeichnet und beleuchtet wird, bei der eine Schutzklappe gleichzeitig als Handhabe fungieren kann, bei der die Handhabe infolge eines in ihr untergebrachten Sensors oder Empfängers einen schlüssellosen Zugang zum Fahrzeug ermöglicht, und bei der die Kameraeinheit nicht nur eine Rückfahrhilfe sondern auch einen Insassenschutz durch ihre Pre-Crash-Funktion realisiert. Die Erfindung stellt folglich eine Anordnung bereit, die ein an einer Klappe eines Fahrzeugs befestigbares Trägergehäuse und eine schwenkbar am Trägergehäuse gelagerten Schutzklappe, die auch als Handhabe fungieren kann, umfasst, wobei die deckelförmig ausgebildete Schutzklappe aus ihrer Schließstellung in eine Offenstellung schwenkbar ist. In der Offenstellung ist in dem Fall, in welchem die Schutzklappe als Handhabe fungiert, ein Hintergreifen der Handhabe möglich. Die Schutzklappe bzw. die Handhabe weist eine Leiterplatte auf, die über ein elektrisch leitendes Federelement mit einem fahrzeugseitigen Leitungselement verbunden ist, um die Leiterplatte mit Energie versorgen zu können und um Informationen zwischen Leiterplatte und einem fahrzeugseitigen Modul auszutauschen. Dabei kann die Leiterplatte zur Beleuchtung der Schutzklappe bzw. Handhabe oder einem außenseitig daran angebrachten Fahrzeugfirmenemblem und/oder zur Erfassung einer Annäherung eines Benutzerkörperteils zum berührungslosen Öffnen der Klappe ausgebildet sein. Die erfindungsgemäße Anordnung bietet demnach eine innovative Kombination von optischer Kennzeichnung und Betätigung. Der Annäherungssensor wiederum, kombiniert mit der Beleuchtungsfunktion, ermöglicht einen besonders verlässlichen und benutzerfreundlichen Zugriff, wobei die Kameraeinheit als Einparkhilfe und als Teil eines Insassenschutzsystems dient.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 eine Seitenansicht eines Kraftfahrzeugs mit einer erfindungsgemäßen Anordnungen,
Figur 2 eine Perspektivansicht auf die Anordnung, von der ein Trägergehäuse in einem Durchbruch einer Außenverkleidung des Fahrzeugs angeordnet ist und bei der sich eine Schutzklappe in einer Offenstellung befindet,
Figur 3 eine Perspektivansicht auf die Anordnung ohne Außenverkleidung, wobei die Schutzklappe jedoch in einer Schließstellung angeordnet ist,
Figur 4 eine perspektivische Seitenansicht auf die erfindungsgemäße Anordnung,
Figur 5 eine perspektivische Einzelteildarstellung der Anordnung aus Figur 4,
Figur 6 eine perspektivische Darstellung der Gehäusebauteile der erfindungsgemäßen Anordnung,
Figur 7 eine vergrößerte und perspektivische Vorderansicht auf eine Kameraeinheit und Antriebseinheit der Anordnung,
Figur 8 eine vergrößerte, perspektivische Rückansicht auf die Gehäusebauteile der erfindungsgemäßen Anordnung,
Figur 9 eine Einzelteildarstellung der Kameraeinheit und eines Teils der Antriebseinheit,
Figur 10 in perspektivischer Ansicht ein Teil der Antriebseinheit, ein Teil der Gehäusebauteile und der Bewegungsmechanik der erfindungsgemäßen Anordnung,
Figur 11 die Bauteile aus Figur 10 in einer anderen perspektivischen Ansicht,
Figur 12 eine weitere Einzelteildarstellung der Kameraeinheit und eines Teils der Antriebseinheit,
Figur 13 die erfindungsgemäße Anordnung bei Positionierung der Kameraeinheit in einer Einfahrposition in zwei Darstellungen, die unterschiedliche Bauteil der Anordnung zeigen,
Figur 14 die erfindungsgemäße Anordnung bei Positionierung der Kameraeinheit in einer Komfortposition in zwei Darstellungen, die unterschiedliche Bauteil der Anordnung zeigen,
Figur 15 die erfindungsgemäße Anordnung bei Positionierung der Kameraeinheit in einer Kollisionsüberwachungsposition in zwei Darstellungen, die unterschiedliche Bauteil der Anordnung zeigen,
Figur 16 die erfindungsgemäße Anordnung bei Positionierung der Kameraeinheit in einer Aktivposition in zwei Darstellungen, die unterschiedliche Bauteil der Anordnung zeigen,
Figur 17 eine seitliche Schnittansicht auf ein Trägergehäuse und die Schutzklappe in Schließstellung der erfindungsgemäßen Anordnung,
Figur 18 eine perspektivische Einzelteildarstellung der Schutzklappe,
Figur 19 eine vergrößerte und perspektivische Vorderansicht auf das Trägergehäuse ohne angebrachter Schutzklappe,
Figur 20 ein Verfahrensschema zum Betrieb der erfindungsgemäßen Anordnung,
Figur 21 ein weiteres Verfahrensschema zum Betrieb der erfindungsgemäßen Anordnung,
Figur 22 ein noch weiteres Verfahrensschema zum Betrieb der erfindungsgemäßen Anordnung,
Figur 23 ein alternatives Verfahrensschema zum Betrieb der erfindungsgemäßen Anordnung,
Figur 24 die erfindungsgemäße Anordnung mit einer zusätzlichen Antriebsvorrichtung,
Figur 25 die Anordnung aus Figur 24 in einer seitlichen Ansicht mit der Kameraeinheit in der Einfahrposition und einem Distanzstück in seiner Betätigungslage und
Figur 26 die Anordnung aus Figur 24 in einer seitlichen Ansicht mit der Kameraeinheit in der Einfahrposition und dem Distanzstück in seiner Ruhelage.

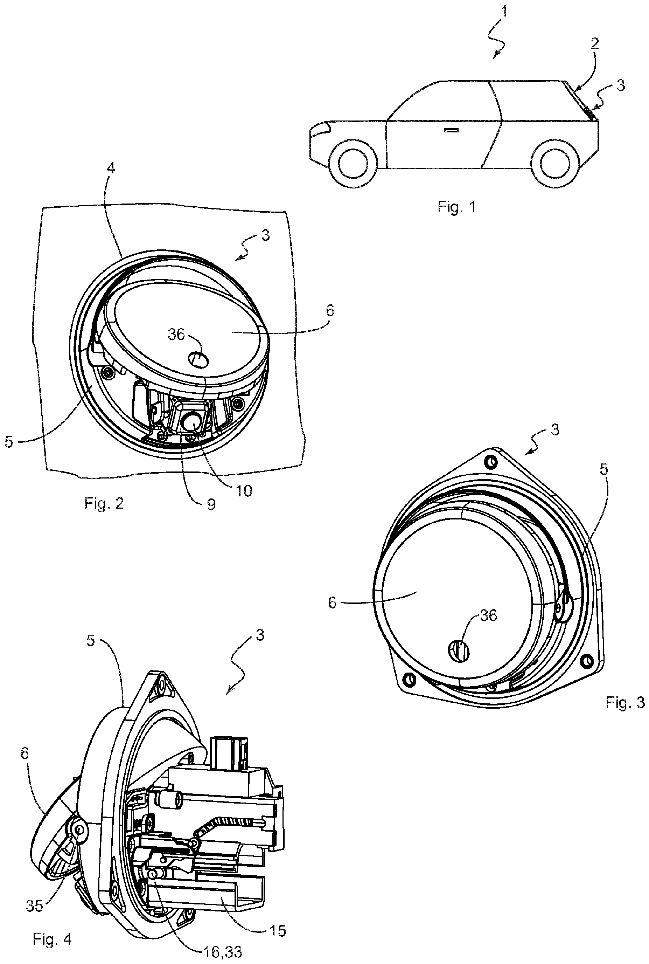

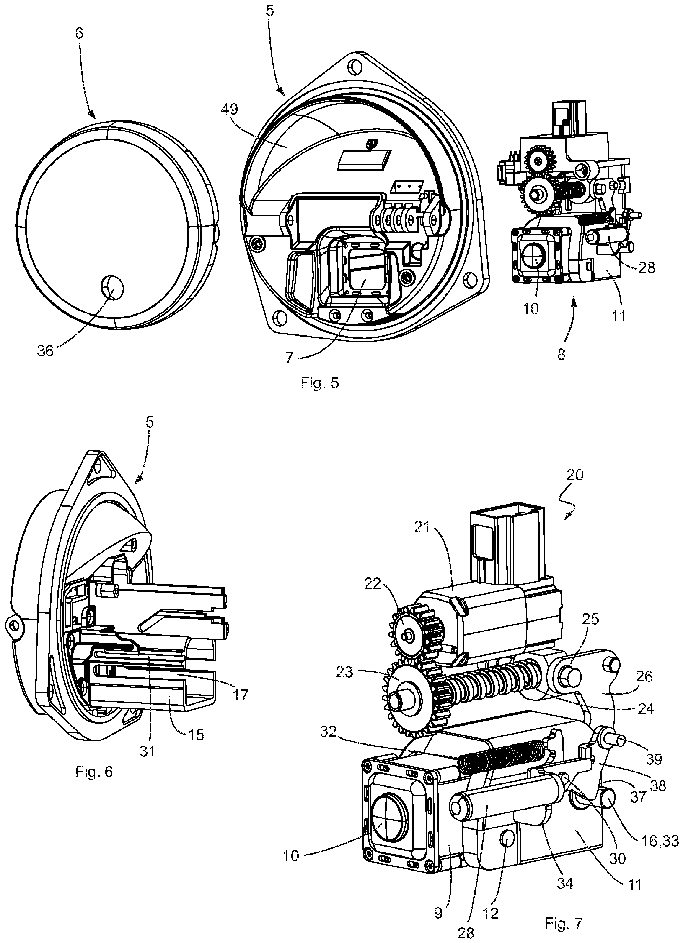

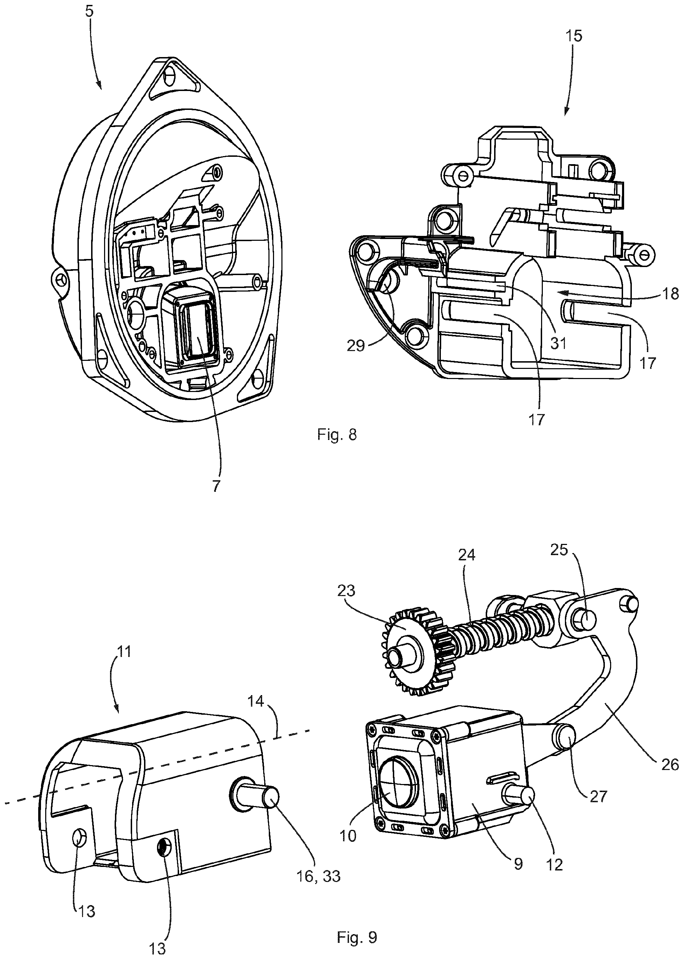

In Figur 1 ist ein Fahrzeug 1 in Form eines PKWs exemplarisch dargestellt, welches in dem Beispiel über eine Klappe bzw. Heckklappe 2 verfügt, an der eine Anordnung 3 gemäß der Erfindung angebracht ist. Die Anordnung 3 ist in einem Durchbruch 4 der Außenverkleidung des Fahrzeugs 1 angeordnet und dort befestigt, wie insbesondere Figur 2 zeigt. Die Anordnung 3 ist in einer Vorderansicht in Figur 3 und in einer Seitenansicht in Figur 4 dargestellt. Die Anordnung 3 umfasst ein Trägergehäuse 5, das zylinderförmig bzw. schalenförmig ausgebildet ist. Eine Schutzklappe 6 ist zwischen einer Schließstellung (siehe Figur 3) und einer Offenstellung (siehe Figuren 2 und 4) bewegbar an dem Trägergehäuse 5 gelagert. In der Schließstellung verschließt die Schutzklappe 6 eine Durchgangsöffnung 7, die in Figur 5 näher ersichtlich ist und die sich von der Vorderseite des Trägergehäuses 5 durch das Trägergehäuse 5 hindurch bis hin zur Rückseite, die in Figur 8 gezeigt ist, erstreckt. Hingegen gibt die Schutzklappe 6, wenn sie sich in ihrer Offenstellung befindet, die Durchgangsöffnung 7 frei.

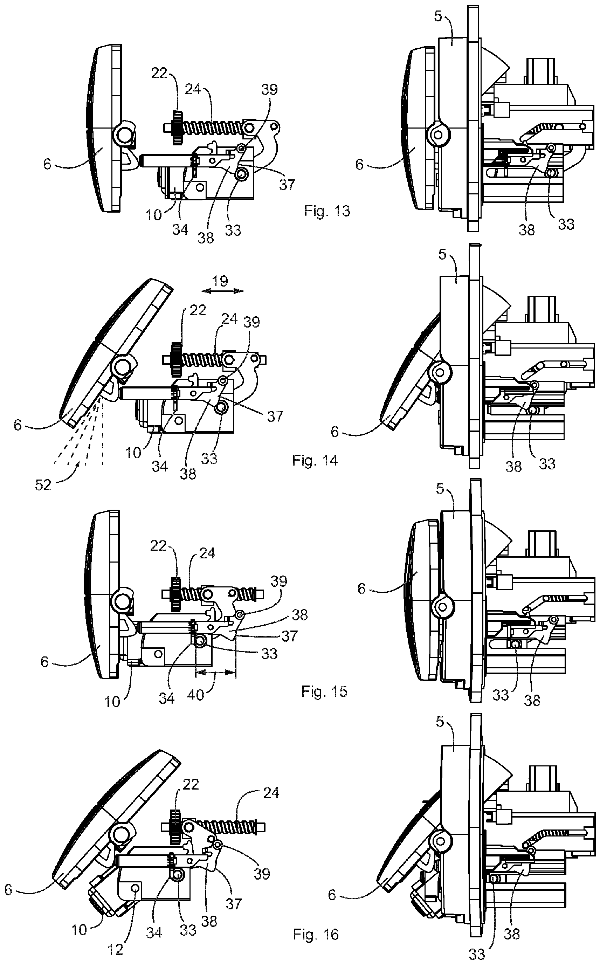

Die Anordnung 3 umfasst ferner eine bewegbar gelagerte Kameraeinheit 8, die beispielsweise in Figur 5 und insbesondere in Figur 9 detaillierter dargestellt ist. Die Kameraeinheit 8 weist eine Kamera 9 mit Objektiv 10 auf, die in einem Kameragehäuse 11 untergebracht ist. Das Kameragehäuse 11 ist in dem dargestellten Ausführungsbeispiel zweiteilig sowie schalenförmig ausgebildet, so dass die Kamera 9 von den beiden schalenförmigen Teilen des Kameragehäuses 11 umschlossen ist. In Figur 9 ist die Kamera 9 von dem Kameragehäuse 11 separiert dargestellt. Die Kamera 9 weist seitlich hervorstehende Drehzapfen 12 auf, die in entsprechenden Drehlagern 13 (siehe Figur 9) des Kameragehäuses 11 gelagert sind und der Kamera 9 innerhalb des Kameragehäuses 11 ein Verschwenken ermöglichen, wie es beispielsweise in Figur 16 gezeigt ist. In der verschwenkten Position nimmt die Kameraeinheit 8 bzw. die Kamera 9 eine Aktivposition ein, in welcher das Objektiv zu der Horizontalachse 14 (siehe Figur 9) des Kameragehäuses 11 geneigt ist.

Die Kameraeinheit 8 ist zwischen einer Ruheposition und der Aktivposition (siehe Figur 16) bewegbar. Zu diesem Zweck erstreckt sich in Verlängerung der Durchgangsöffnung 7 ein an dem Trägergehäuse 5 angebrachtes Aufnahmegehäuse 15, wie beispielsweise aus Figur 6 und Figur 8 hervorgeht. In dem Aufnahmegehäuse 15 ist ein Bewegungsraum 18 vorgesehen, der sich an die Durchgangsöffnung 7 anschließt und in welchem die Kameraeinheit 8 zumindest zwischen ihrer Aktivposition und Ruheposition verfahrbar gelagert ist. Dabei wird die Bewegung der Kameraeinheit 8 mit Hilfe von Zapfenelementen 16 geführt, die sich beidseitig von dem Kameragehäuse 11 aus erstrecken. Die Zapfenelemente 16 sind in entsprechend komplementär in dem Aufnahmegehäuse 15 ausgebildeten Führungsnuten 17 aufgenommen und in den Führungsnuten 17 bewegbar. Die Führungsnuten 17 erstrecken sich entlang des Bewegungsraumes 18 im Wesentlichen horizontal von dem Trägergehäuse 5 fort bzw. zu diesem hin, so dass eine lineare Bewegung der Kameraeinheit 8 zu der Durchgangsöffnung 7 hin und von dieser fort sichergestellt ist. Statt Zapfenelementen 16 an beiden Seiten des Kameragehäuses 11 ist es ausreichend, wenn die Kameraeinheit 8 wenigstens ein Zapfenelement 16 aufweist, welches in einer komplementären Führungsnut 17 in dem Aufnahmegehäuse 15 bewegungsgeführt ist. Dadurch, dass der Bewegungsraum 18 des Kameragehäuses 11 direkt an die Durchgangsöffnung 7 anschließt, ist es möglich, dass bei einer Anordnung der Kameraeinheit 8 in der Aktivposition das Objektiv 10 der Kamera 9 aus der Durchgangsöffnung 7 des Trägergehäuses 5 nach außen hervorsteht und zu der Bewegungsrichtung 19 (siehe beispielsweise Figur 14) der Kameraeinheit 8 bzw. des Kameragehäuses 11 geneigt ausgerichtet ist, wie es zum Beispiel Figur 16 gezeigt ist, wobei in Figur 2 ebenfalls dargestellt ist, wie das Objektiv 10 der Kamera 9 aus der Durchgangsöffnung 7 des Trägergehäuses 5 hervorsteht. Die Figuren 2, 4 und 16 zeigen folglich die Aktivposition der Kameraeinheit 8. In der Aktivposition der Kameraeinheit 8 befindet sich das Fahrzeug 1 in der Rückwärtsfahrt. Ferner dient in der Aktivposition die geneigt ausgerichtete Kamera 9 als Einparkhilfe und filmt den für den Fahrzeugführer nicht einsehbaren Bereich vor der Stoßstange des Fahrzeugs 1 und stellt das Gefilmte auf einem Bildschirm im Fahrzeuginneren für den Fahrzeugführer dar, wenn dieser das Fahrzeug 1 rückwärts bewegt. Es sei angemerkt, dass das Trägergehäuse 5 und das Aufnahmegehäuse 15 in dem dargestellten Ausführungsbeispiel zweiteilig ausgeführt ist, dass aber auch eine einstückige Ausführung möglich wäre, so dass das Aufnahmegehäuse 15 nicht an dem Trägergehäuse 5 angeschraubt werden müsste.

Die Kameraeinheit 8 wird mit Hilfe einer Antriebseinheit 20 innerhalb des Aufnahmegehäuses 15 bewegt und umfasst mit Bezug auf Figur 7 einen Elektromotor 21, ein erstes Zahnrad 22, ein zweites Zahnrad 23 und eine Schnecke 24, wobei der Elektromotor 21 das erste Zahnrad 22 antreibt, welches mit dem zweiten Zahnrad 23 in Eingriff steht, das wiederum mit der Schnecke 24 drehfest verbunden ist. Allgemein ausgedrückt treibt die rückseitig an dem Trägergehäuse 5 angebrachte bzw. auf dem Aufnahmegehäuse 15 befestigte Antriebseinheit 20 die Schnecke 24 an. Die Schnecke 24 erstreckt sich in Bewegungsrichtung 19 der Kameraeinheit 8 bzw. des Kameragehäuses 11 und ist mit einem ersten Ende 25 eines Hebelelements 26 sowohl gelenkig verbunden als auch bewegungsgekoppelt, so dass das Hebelelement 26 sich relativ zu der Schnecke 24 drehen kann (siehe zum Beispiel Figur 9). Das zweite Ende 27 des Hebelelements 26 ist ebenfalls gelenkig verbunden, allerdings hier mit der Kameraeinheit 8 bzw, Kamera 9, genauer gesagt mit der Rückseite der Kamera 9 (siehe Figur 9).

Der Elektromotor 21 der Antriebseinheit 20 bewegt folglich das erste Ende 25 des Hebelelements 26, das über sein zweites Ende 27 mit der Kamera 9 gekoppelt ist, die wiederum in dem Kameragehäuse 11 über die Drehzapfen 12 drehbar gelagert ist, so dass eine Bewegung des Hebelelements 26 entlang der Schnecke 24 die Kameraeinheit 8 in dem Bewegungsraum 18 des Aufnahmegehäuses 15 in Richtung zu und von der Durchgangsöffnung 7 des Trägergehäuses 5 weg bewegt.

Um die Kameraeinheit 8 zumindest in einer zurückgezogenen Ruheposition vor Verunreinigungen zu schützen, ist die Schutzklappe 6 vorgesehen. Mit Hilfe der Schutzklappe 6 wird die Durchgangsöffnung 7, durch welche die Kameraeinheit 8 bei ihrer Bewegung in die Aktivposition aus dem Trägergehäuse 5 herausfährt (siehe zum Beispiel Figur 2), verschlossen (siehe zum Beispiel Figuren 3, 13 oder 15), wobei sich die Kameraeinheit 8 dann in einer zurückgezogenen Position befindet. Folglich muss beim Übergang von der zurückgezogenen Position in die Aktivposition der Kameraeinheit 8 die Schutzklappe 6 zwischen ihrer Schließstellung, in welcher die Kameraeinheit 8 von außen betrachtet hinter der Schutzklappe 6 angeordnet ist, und ihrer Offenstellung bewegt werden.

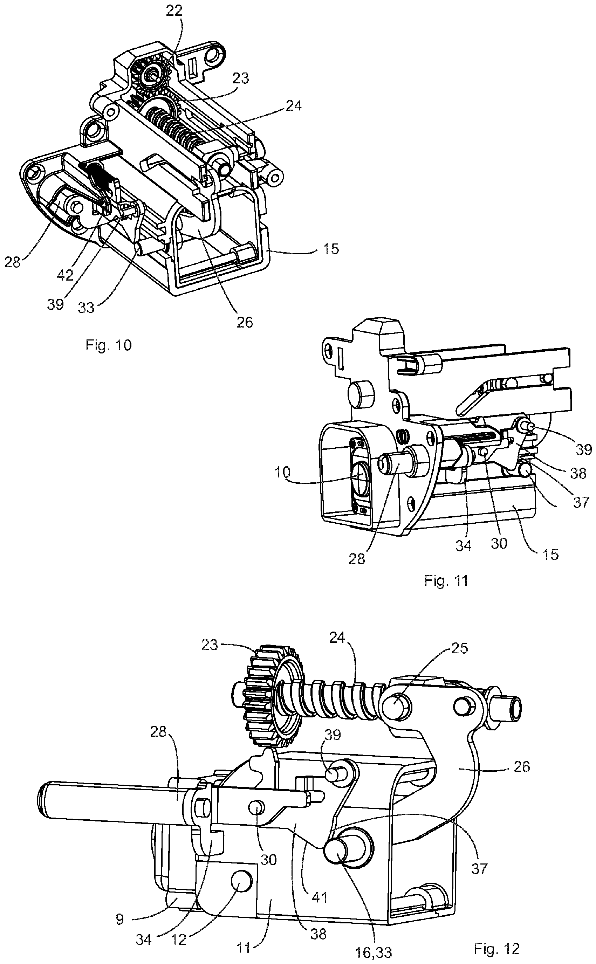

Damit die Schutzklappe 6 bewegt werden kann, ist eine Bewegungsmechanik vorgesehen, welche die Bewegung der Kameraeinheit 8 mit einer Bewegung der Schutzklappe 6 koppelt. Folglich bewirkt die Antriebseinheit 20 nicht nur eine Bewegung der Kameraeinheit 8 sondern auch der Schutzklappe 6, so dass auf einen zusätzlichen Antrieb verzichtet werden kann. Um die Schutzklappe 6 zwischen ihrer Schließstellung und Offenstellung zu bewegen, ist in dem dargestellten Ausführungsbeispiel ein Stößel 28 (siehe zum Beispiel Figur 7) vorgesehen. Der Stößel 28 ist parallel zur Schnecke 24 bewegbar an dem Aufnahmegehäuse 15 gelagert, wobei ein Abschnitt des Stößels 28 durch eine in Richtung der Schutzklappe 6 ausgebildete Führungsöffnung 29 (siehe Figur 8) gesteckt ist, wohingegen an dem der Schutzklappe 6 abgewandten Längsende des Stößels 28 ein Bewegungszapfen 30 angeformt ist (siehe zum Beispiel Figuren 10, 11 und 12), der in einer Führungsausnehmung 31 geführt ist. Die Führungsausnehmung 31 ist in dem Aufnahmegehäuse 15 oberhalb der Führungsnut 17 und parallel zu dieser ausgebildet (siehe zum Beispiel Figur 6), so dass sich die Führungsausnehmung 31 ebenfalls in Richtung der Schutzklappe 6 erstreckt. Mit Hilfe des in der Führungsausnehmung 31 geführten Bewegungszapfens 30 kann der Stößel 28, dessen Bewegung zusätzlich durch die Führungsöffnung 29 geführt und ausgerichtet ist, in Richtung zu der Schutzklappe 6 hin und von dieser weg bewegt werden.

Der Stößel 28 ist gegen die Kraft eines Federelements 32 (siehe beispielsweise Figuren 7 und 10) in Richtung des Trägergehäuses 5 bewegbar, wobei das Federelement 32 den bewegten Stößel 28 in eine Grundstellung zurück von dem Trägergehäuse 5 drängt. Zusätzlich muss der Stößel 28 aber auch gegen die Kraft eines Federelements bewegt werden, welches die Schutzklappe 6 in ihre Schließstellung drängt. Um den Stößel 28 in Richtung des Trägergehäuses 5 zu bewegen, damit der Stößel 28 die schwenkbar an dem Trägergehäuse 5 gelagerte Schutzklappe 6 aus ihrer Schließstellung in ihre Offenstellung drücken kann, ist ein Betätigungselement 33 vorgesehen, welches gegen eine erste Anlagefläche 34 drückt, die an dem Stößel 28 ausgebildet ist und sich im Wesentlichen senkrecht zu der Schnecke 24 erstreckt (siehe Figur 12). Das Betätigungselement 33 ist als ein Steuerzapfen 16 ausgebildet und entspricht dem Zapfenelement 16, welches an dem Kameragehäuse 11 ausgebildet ist. Das an der Kameraeinheit 8 als Steuerzapfen 16 ausgebildete Betätigungselement 33 steht in Wirkverbindung mit der ersten Anlagefläche 34 des am Trägergehäuse 5 bewegbar gelagerten Stößels 28. Dadurch, dass eines der seitlich an dem Kameragehäuse 11 ausgebildeten Zapfenelemente 16 gleichzeitig das Betätigungselement 33 bzw. der Steuerzapfen 16 ist, bewirkt eine Bewegung der Kameraeinheit 8 aus einer zurückgezogenen Position in Richtung der Schutzklappe 6, dass der Steuerzapfen 16 gegen die erste Anlagefläche 34 des Stößels 28 drückt und den Stößel 28 in Richtung der Schutzklappe 6 bewegt, so dass der Stößel 28 die Schutzklappe 6 um ihre Lagerachse 35 verschwenkt, wodurch die Schutzklappe 6 in ihre Offenstellung gelangt und die Kamera 9 in der Aktivposition, bei welcher sie aus der Durchgangsöffnung 7 des Trägergehäuses 5 hervorsteht, angeordnet ist (siehe Figur 16). Das mit der Antriebseinheit 20 bewegungsgekoppelte Betätigungselement 33 drängt folglich nur bei Rückwärtsfahrt des Fahrzeugs 1 die Schutzklappe 6 in ihre Offenstellung, wobei die Kameraeinheit 8 gleichzeitig in ihre Aktivposition bewegt wird.

Bevor die Kameraeinheit 8 in die Aktivposition gelangt, ist sie in einer hinter die Durchgangsöffnung 7 zurückgezogenen Position angeordnet, welche als Kollisionsüberwachungsposition bezeichnet wird und die in Figur 15 dargestellt ist. In der Kollisionsüberwachungsposition ist die Schutzklappe 6 in ihrer Schließposition angeordnet. Die Kameraeinheit 8 befindet sich direkt hinter der Schutzklappe 6 und der Steuerzapfen 16 liegt an der ersten Anlagefläche 34 an, wobei das Objektiv 10 in der Kollisionsüberwachungsposition in Bewegungsrichtung 19 der Kameraeinheit 8 ausgerichtet ist und nicht zu der Bewegungsrichtung 19 geneigt ist, wie es in der Aktivposition der Kameraeinheit 8 der Fall ist. Die in Figur 15 gezeigte Kollisionsüberwachungsposition wird von der Kameraeinheit 8 bei Vorwärtsfahrt des Fahrzeugs 1 eingenommen, wobei die Kameraeinheit 8 an einer in der Schutzklappe 6 ausgebildeten Überwachungsöffnung 36 (siehe Figuren 3 und 5) zum Aufnehmen oder Filmen des (nachfolgenden oder vorausfahrenden) Verkehrs angeordnet ist (siehe zum Beispiel Figur 15). Die Überwachungsöffnung 36 ist ein Durchgangsloch, das in der Schutzklappe 6 ausgebildet ist und das außenseitig von einer transparenten Abdeckung abgedeckt ist, damit die hinter der Schutzklappe 6 angeordnete Kameraeinheit 8 durch das Durchgangsloch freie Sicht nach außen hat und dennoch kein Schmutz von außen eindringen kann.

Folglich liegt bei einer Bewegung der Kameraeinheit 8 aus der Kollisionsüberwachungsposition in die Aktivposition der Steuerzapfen 16 an der ersten Anlagefläche 34 an und drückt die erste Anlagefläche 34 derart in Richtung der Durchgangsöffnung 7, dass der Stößel 28 die Schutzklappe 6 in ihre Offenstellung drängt und insbesondere verschwenkt, indem der Stößel 28 die Schutzklappe 6 im Abstand zu ihrer Lagerachse 35 drückt.

In der Aktivposition und der Kollisionsüberwachungsposition ist die Kameraeinheit 8 aktiv und filmt. Die Kameraeinheit 8 kann aber auch Positionen einnehmen, die entfernter als die in Figur 15 gezeigte Kollisionsüberwachungsposition von der Schutzklappe 6 angeordnet sind. Mit anderen Worten kann die Kameraeinheit weiter zurückgezogene Positionen einnehmen. Eine solche Position ist beispielsweise eine Komfortposition, die in Figur 14 gezeigt ist und die einer Vorfeldbeleuchtung des Fahrzeugs 1 dient, wobei die Schutzklappe 6 in der Komfortposition in ihrer Offenstellung angeordnet ist.

Wie aus Figur 14 ersichtlich ist, liegt in der Komfortposition der Steuerzapfen 16 bzw. das Betätigungselement 33 nicht mehr an der ersten Anlagefläche 34 an. Vielmehr liegt der Steuerzapfen 16 nun an einer zweiten Anlagefläche 37 an, die an einem Distanzstück 38 ausgebildet ist. Das Distanzstück 38 wiederum ist an dem der Schutzklappe 6 abgewandten Längsende des Stößels 28 drehbar über den Bewegungszapfen 30 gelagert, wie beispielsweise aus den Figuren 10, 11 und 12 ersichtlich ist. Der Bewegungszapfen 30 dient also nicht nur der Führung des Stößels 28, sondern fungiert gleichzeitig auch als Drehachse für das Distanzstück 38. Das Distanzstück 38 weist ferner einen Rückstellzapfen 39 (siehe zum Beispiel Figur 11 oder 12) auf. Die zweite Anlagefläche 37 ist in einem Abstand 40 (siehe Figur 15) zu der ersten Anlagefläche 34 angeordnet. Der Abstand 40 hat die Funktion, dass die Kameraeinheit 8 in einer zurückgezogenen Position (Komfortposition) hinter der Durchgangsöffnung 7 angeordnet werden kann, wenn der Stößel 28 die Schutzklappe 6 in die Offenstellung drängt. Die Komfortposition dient wie vorstehend ausgeführt einer Vorfeldbeleuchtung des Fahrzeugs 1. Die dafür notwendige Beleuchtung ist geschützt auf der Innenseite der Schutzklappe 6 angeordnet, so dass eine ausgefahrene Kameraeinheit 8 die Beleuchtung stören und im Lichtweg der Beleuchtung angeordnet sein würde. Aus diesem Grund ist die Komfortposition vorgesehen, in der das als Steuerzapfen 16 ausgebildete Betätigungselement 3 an der zweiten Anlagefläche 37 des Distanzstücks 38 anliegt und die zweite Anlagefläche 37 derart in Richtung der Durchgangsöffnung 7 drückt, dass der Stößel 28 die Schutzklappe 6 in ihre Offenstellung drängt. Dabei nimmt die Kameraeinheit 8 eine zurückgezogene Position ein und gibt den Bereich unterhalb der aufgeschwenkten Schutzklappe 6 frei, damit Licht ungestört ausgestrahlt werden kann, wie durch die gestrichelten Linien 52 in Figur 14 angedeutet ist.

Die Komfortposition ist von der Kameraeinheit 8 nur bei vorheriger Bewegung in eine Position, die hinter der Komfortposition selbst liegt, einnehmbar. Mit anderen Worten muss zunächst die Kameraeinheit 8 ein Stück hinter die Komfortposition bewegt werden, damit der Steuerzapfen 16 bzw. das Betätigungselement 33 aus seiner Position zwischen der ersten Anlagefläche 34 und der zweiten Anlagefläche 37 angeordneten Position in eine mit Bezug auf die Schutzklappe 6 hinter der zweiten Anlagefläche 37 liegenden Position gelangen kann. Zu diesem Zweck wird die Kameraeinheit 8 von der Antriebseinheit 20 von der Schutzklappe 6 weg aus der Komfortposition in eine Einfahrposition bewegt, die in Figur 13 dargestellt ist. Bei dieser Bewegung bewegt sich der Steuerzapfen 16 von der ersten Anlagefläche 34 weg. Dabei stützt sich eine schräg zur Schnecke 24 verlaufende Führungsfläche 41 (siehe zum Beispiel Figur 12) des Distanzstücks 38 derart an dem Betätigungselement 33 bzw. an dem Steuerzapfen 16 ab, dass bei einer rückwärtigen Bewegung der Kameraeinheit 8 von der Schutzklappe 6 weg der Steuerzapfen 16 in Anlage zu der Führungsfläche 41 gelangt. Aufgrund der drehbaren Lagerung des Distanzstücks 38 drückt bei weiterer rückwärtiger Bewegung des Steuerzapfens 16 dieser das Distanzstück 38 nach oben und damit aus seinem Bewegungsweg, bis der Steuerzapfen 16 hinter die Führungsfläche 41 an die zweite Anlagefläche 37 gelangt. Wenn der Steuerzapfen 16 die Führungsfläche 41 passiert hat, schwenkt das Distanzstück 38 wieder nach unten und der Steuerzapfen 16 gelangt in Anlage an die zweite Anlagefläche 37, die sich an die Führungsfläche 41 anschließt. Folglich ist die Komfortposition von der Kameraeinheit 8 nur bei vorheriger Bewegung in die Einfahrposition einnehmbar, wobei bei einer von der Schutzklappe 6 weg gerichteten Bewegung der Kameraeinheit 8 aus der Kollisionsüberwachungsposition in die Einfahrposition der Steuerzapfen 16 das Distanzstück 38 derart aus seinem Bewegungsweg drückt, dass der Steuerzapfen 16 an der zweiten Anlagefläche 37 anliegt. Bei einer Bewegung der Kameraeinheit 8 aus der Einfahrposition in Richtung der Komfortposition liegt der Steuerzapfen 16 an der zweiten Anlagefläche 37 des Distanzstücks 38 an und drückt die zweite Anlagefläche 37 derart in Richtung der Durchgangsöffnung 7, dass der Stößel 28 die Schutzklappe 6 in ihre Offenstellung drängt, wenn die Kameraeinheit 8 in ihrer Komfortposition angelangt ist, wie es in Figur 14 gezeigt ist. Insgesamt ist damit die Kameraeinheit 8 zwischen der Aktivposition und der Einfahrposition bewegbar gelagert. Dabei ist die Kameraeinheit 8 in der Einfahrposition weiter von der Schutzklappe 6 entfernt angeordnet als in der Kollisionsüberwachungsposition, wobei in der Komfortposition die Kameraeinheit 8 zwischen der Kollisionsüberwachungsposition und der Einfahrposition, die auch eine Ruheposition sein kann, angeordnet ist. Die Einfahrposition oder die Kollisionsüberwachungsposition kann hierbei die Ruheposition sein, in welcher die Schutzklappe 6 in jedem Fall in ihrer Schließstellung angeordnet ist und die Kameraeinheit 8 vor einem Zugriff von Außen schützt.

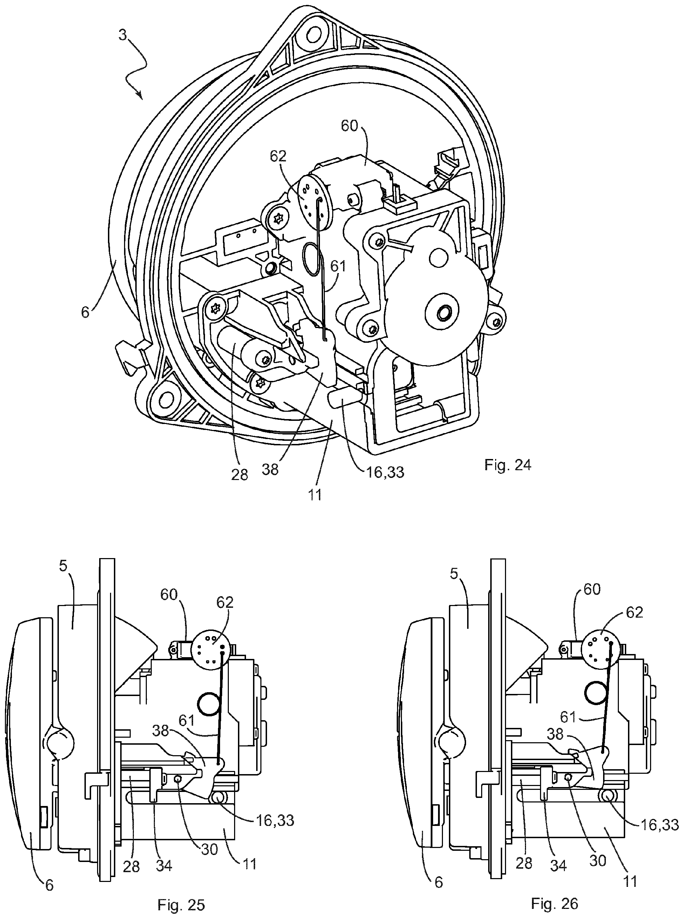

Damit die Kameraeinheit 8 aus der Komfortposition, bei welcher die Schutzklappe 6 in ihrer Offenstellung angeordnet ist, wieder in die Kollisionsüberwachungsposition, in welcher die Schutzklappe 6 in ihrer Schließstellung angeordnet ist, wechseln kann, muss das Steuerelement 16 von der zweiten Anlagefläche 37 weg zu der ersten Anlagefläche 34 hin bewegt werden. Für diesen Wechsel ist der Rückstellzapfen 39 vorgesehen, der an dem Distanzstück 38 angeordnet ist und oberhalb des Steuerzapfens 16 liegt, wenn der Steuerzapfen 16 an der zweiten Anlagefläche 37 anliegt. Bei einer Bewegung der Kameraeinheit 8 aus der Komfortstellung in Richtung der Kollisionsüberwachungsposition bzw. in Richtung der Schutzklappe 6 gelangt der Rückstellzapfen 39 in Anlage an eine Gehäuseführung 42 (siehe Figur 10), die den Rückstellzapfen 39 von dem Steuerzapfen 16 weg bewegt, was durch die drehbare Lagerung des Distanzstücks 38 möglich ist. Durch die Verschwenkung gelangt das Distanzstück 38 aus dem linearen Bewegungsweg des Steuerzapfens 16, so dass der Steuerzapfen 16 mit Bezug auf die Schutzklappe 6 vor die zweite Anlagefläche 37 und in Anlage an die erste Anlagefläche 34 gelangt. Mit anderen Worten führt bei der zu der Schutzklappe 6 hin gerichteten Bewegung der Kameraeinheit 8 aus der Komfortposition in die Kollisionsüberwachungsposition die Gehäuseführung 42 den Rückstellzapfen 39 derart, dass sich die zweite Anlagefläche 37 des Distanzstücks 38 aus dem Bewegungsweg des Steuerzapfens 16 bewegt und der Steuerzapfen 16 in Anlage an die erste Anlagefläche 34 kommt. Nachteilig hierbei ist allerdings, dass das Distanzstück 38 schlagartig nach unten und der Stößel 28 ebenfalls schlagartig in Richtung der Einfahrposition gedrückt werden, wenn das Distanzstück 38 mit Hilfe des Rückstellzapfens 39 aus dem Bewegungsweg des Steuerzapfens 16 gedrängt wird, weil die Kraft des Federelements 32 und die Kraft der die Schutzklappe 6 in Schließstellung drängenden Feder auf diese Bauteile wirkt. Die schlag- und rückartige Bewegung von Distanzstück 38 und Stößel 28 erzeugt dabei ein nicht erwünschtes Geräusch, welches durch die in den Figuren 24, 25 und 26 gezeigte Maßnahme verhindert werden kann. Die Anordnung 3 ist um eine Antriebsvorrichtung 60 ergänzt, die in dem dargestellten Ausführungsbeispiel an dem Kameragehäuse 11 angebracht ist. Alternativ könnte die Antriebsvorrichtung 60 auch an dem Trägergehäuse 5 angebracht sein. Ferner kann die Antriebsvorrichtung 60 ein Servomotor oder ein Hubmagnet sein, der mit dem Betrieb der Antriebseinheit 20 der Kameraeinheit 8 steuerungsgekoppelt ist. Je nach Position der Kameraeinheit 8 wird die Antriebsvorrichtung 60 in Betrieb genommen, um die zweite Anschlagfläche 37 des Distanzstücks 38 aus dem Bewegungsweg des Steuerzapfens 16, d.h. des Betätigungselements 33, zu bewegen, wie in Figur 26 gezeigt ist, wohingegen die Antriebsvorrichtung 60 in Figur 25 das Distanzstück 38 in dem Bewegungsweg des Betätigungselements 33 anordnet. Mit Hilfe der Bewegungs- und Steuerungskopplung bewegt die Antriebsvorrichtung 60 die zweite Anlagefläche 37 aus dem Bewegungsweg des Steuerzapfens 16, wenn die Kameraeinheit 8 sich in Richtung der Schutzklappe 6 aus der Komfortposition in die Kollisionsüberwachungsposition bewegt. Von der Bewegungskopplung ist ein Koppelelement 61 umfasst, welches die Antriebsvorrichtung 60 derart mit dem Distanzstück 38 verbindet, dass das Distanzstück 38 um den Bewegungszapfen 30 des Stößels 28 verschwenkt werden kann. Von der Antriebsvorrichtung 60 wird eine Drehbewegung erzeugt, die auf ein Scheibenelement 62 übertragen wird. An dem Scheibenelement 62 ist radial zu dessen Zentrum versetzt das Koppelelement 61 mit einem ersten Ende angebracht, wobei das andere Ende des Koppelelements 61 an dem Distanzstück 38 angebracht ist. Eine Antriebsbewegung der Antriebsvorrichtung 60 dreht das Scheibenelement 62 aus der in Figur 25 gezeigten Lage in die in Figur 26 gezeigte Lage, wodurch das erste Ende des Koppelelements 61 mit Bezug auf die Figuren 25 und 26 nach oben gelangt und dadurch das Distanzstück 38 nach oben und aus dem Bewegungsweg des Betätigungselements 33 heraus bewegt. Die Antriebsvorrichtung 60 verhindert ruckartige oder schlagartige Bewegungen des Stößels 28 und des Distanzstücks 38, so dass unerwünschte Geräusche nicht entstehen können, wie es zum Beispiel bei der Ausführung mit Rückstellzapfen 39 (siehe zum Beispiel Figur 12) der Fall ist. Vielmehr ist das Distanzstück 38 mit seiner zweiten Anlagefläche 37 nur dann in dem Bewegungsweg des Betätigungselements 33 angeordnet, wenn die Schutzklappe 6 für die Komfortposition mit Vorfeldbeleuchtung aufgestellt und in Offenstellung angeordnet werden soll. Ein ruckartiges oder schlagartiges Zurückschnellen des Stößels 28 wird mit Hilfe der Antriebsvorrichtung 60 verhindert.

Auf Basis der vorstehend beschriebenen Konstruktion ist die Kameraeinheit der Reihe nach aus der Aktivposition über die Kollisionsüberwachungsposition und über die Komfortposition in die Einfahrposition bewegbar, wobei als Ruhepositionen die Kollisionsüberwachungsposition oder die Einfahrposition in Betracht kommen, bei denen die Schutzklappe 6 in ihrer Schließstellung angeordnet ist. Hingegen ist sowohl in der Komfortposition als auch in der Aktivposition die Schutzklappe 6 in Offenstellung angeordnet, so dass sich diese Positionen nicht für die Ruheposition eignen.

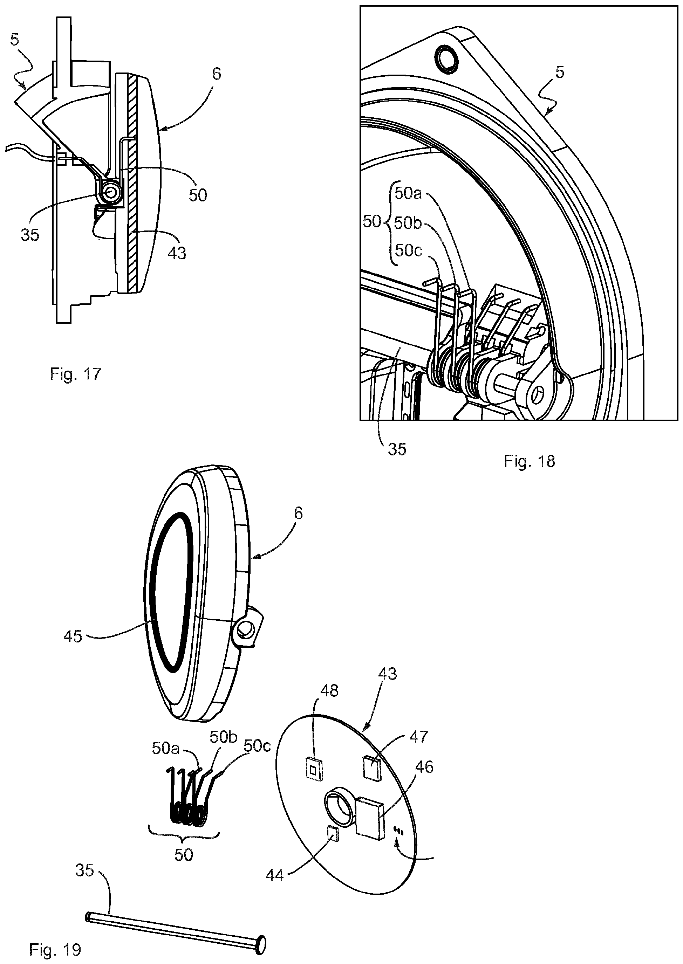

Die Schutzklappe 6 ist in den Figuren 17, 18 und 19 näher dargestellt, wobei aus der Schnittansicht der Figur 17 zu erkennen ist, dass die deckelförmig ausgebildete Schutzklappe 6 eine Leiterplatte 43 aufweist, die im Detail in Figur 19 dargestellt ist. Auf der in der Schutzklappe 6 integrierten Leiterplatte 43 ist ein kapazitiver Sensor als ein Annäherungssensor 46 zur Erfassung einer Annäherung eines Benutzerkörperteils und eine oberflächenmontierte LED als Lichtquelle 44 zur Beleuchtung des Fahrzeugfirmenemblems 45 (lediglich in Figur 19 als kreisförmiges Emblem auf der Schutzklappe 6 dargestellt) oder des Vorfeldes der Anordnung 1 angeordnet. Ferner weist die Leiterplatte 16 eine Steuer- und Auswerteeinrichtung 47 auf, die mit dem als kapazitiven Sensor ausgebildeten Annäherungssensor 46 und/oder der als LED ausgebildeten Lichtquelle 44 gekoppelt ist. Schließlich ist auf der der Lichtquelle 44 abgewandten Seitenfläche der Leiterplatte 43 ein in Figur 19 gestrichelt dargestellter Mikroschalter 48 angeordnet, der eine manuelle Betätigung der als Handhabe ausgebildeten Schutzklappe 6 registrieren kann, wenn diese an der Wandung einer Aufnahmekammer 49 des Trägergehäuses 5 (siehe Figur 5) bei Betätigung anschlägt.

Die Schutzklappe 6, die auch als Handhabe ausgebildet sein kann, wird von einem Federelement 50 in ihrer Schließstellung gehalten. In dem dargestellten Ausführungsbeispiel umfasst das Federelement 50 insgesamt drei Schraubenfedern 50a, 50b, 50c, die über die Lagerachse 35 der Schutzklappe 6 geschoben sind und voneinander beabstandet angeordnet sind, wie beispielsweise aus Figur 18 ersichtlich ist.

Das in den Figuren gezeigte Ausführungsbeispiel stellt also eine Anordnung einer Kameraeinheit 8 in Kombination mit einer als Handhabe ausgebildeten Schutzklappe 6 bereit, welche ein Fahrzeugfirmenemblem 15 beleuchtet und dem Benutzer eine klar lokalisierbare und einfach zu betätigende Einrichtung bietet. Der Benutzer kann sowohl eine manuelle Betätigung der Schutzklappe bzw. Handhabe 6 durch deren Verschwenkung als auch eine Annäherungsbetätigung, die durch den Annäherungssensor 46 registriert wird, ausführen. Die Steuer- und Auswerteeinrichtung 47 kann die Lichtquelle 44 in Abhängigkeit von den Betätigungen ansteuern. Die Lichtquelle 44 kann also in Abhängigkeit von der mechanischen bzw. manuellen Betätigung der als Handhabe ausgebildeten Schutzklappe 6, die durch den Mikroschalter 48 registriert und erfasst wird, und auch durch die Annäherungserkennung durch den Annäherungssensor 46 angesteuert werden. Zur Übertragung von Energie und Informationen zur Leiterplatte 43 hin und von dieser fort ist das zwischen der Schutzklappe 6 und dem Trägergehäuse 5 angeordnete Federelement 50 elektrisch leitend ausgebildet. Insbesondere sind die drei Schraubenfedern 50a, 50b, 50c, die das Federelement 50 definieren, aus einem elektrisch leitenden Material, wie zum Beispiel eine Kupferknetlegierung, hergestellt. Das elektrisch leitende Federelement 50 sorgt für eine elektrische Verbindung der Leiterplatte 43 mit einem fahrzeugseitigen Leitungselement und bringt zusätzlich eine die Schutzklappe 6 in die Schließstellung drängende Rückstellkraft auf.

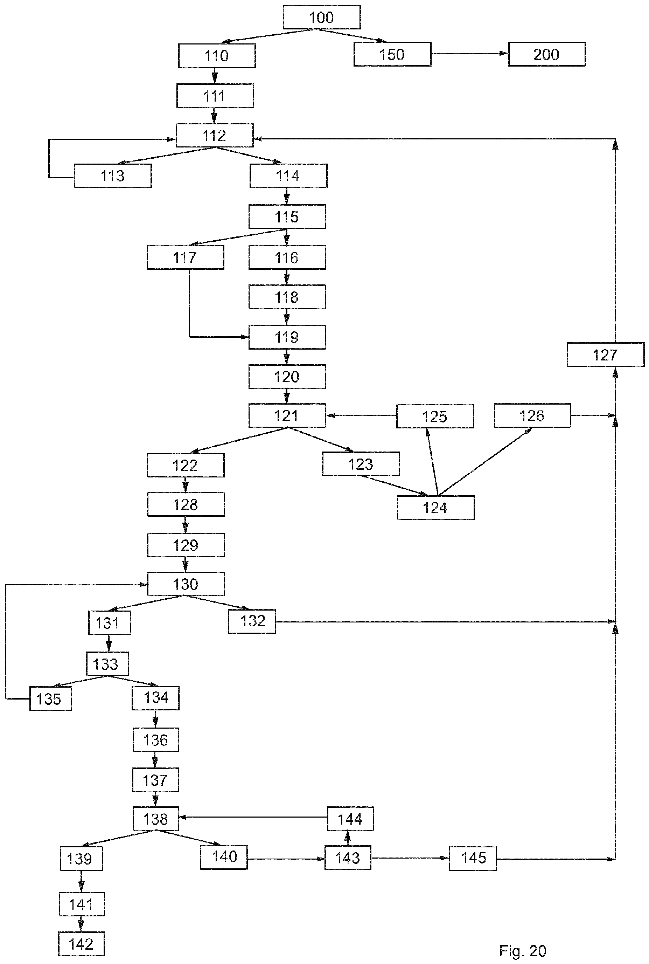

Nachstehend wird ein Verfahren zum Betrieb der Anordnung 3 gemäß der vorliegenden Erfindung mit Bezug auf die Figuren 20, 21, 22 und 23 beschrieben. Das Verfahren verwendet die Methode des sogenannten Pollings, bei dem der Status der zyklisch abgefragt wird.

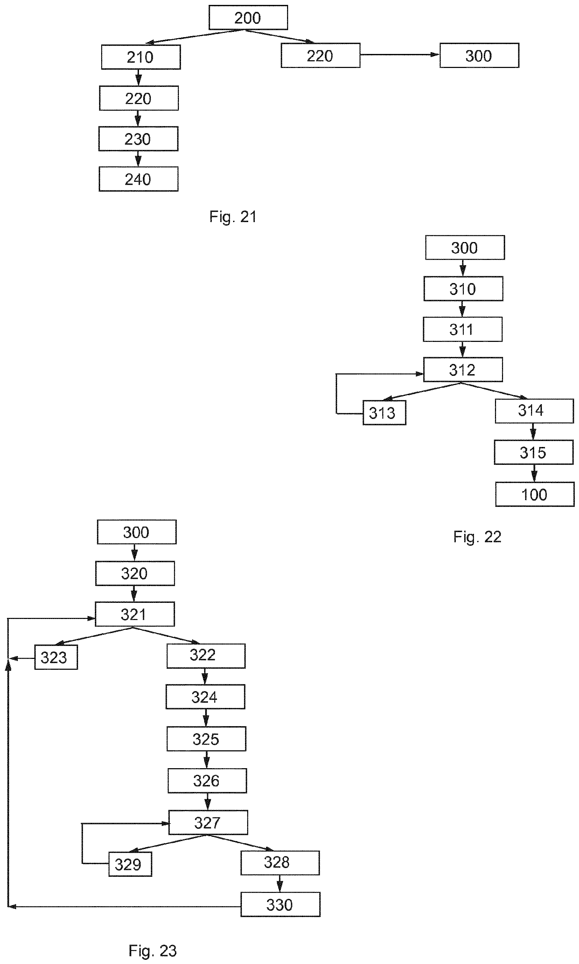

Mit Bezug auf Figur 20 wird bei dem Verfahren in einem Schritt 100 überprüft, ob das Fahrzeug 1 abgestellt ist und/oder die Zündung des Fahrzeugs 1 aus ist. Sollte das Fahrzeug 1 in Bewegung sein, so würde das Verfahren dies in Schritt 150 ermitteln und mit Schritt 200 (siehe Figur 21) fortfahren, was später im Detail beschrieben wird. Wenn das Fahrzeug abgestellt ist und/oder die Zündung aus ist, was in Schritt 110 ermittelt wird, geht das Verfahren zu Schritt 111. In Schritt 111 wird überprüft, ob die Kameraeinheit 8 in der Ruheposition bzw. Einfahrposition angeordnet ist. Sollte dies nicht der Fall sein, wird die Kameraeinheit 8 in dem Schritt 111 entsprechend in die Einfahrposition verfahren. In Schritt 112 überprüft die Anordnung 3, vorzugsweise der Annäherungssensor 46 oder eine Empfangseinrichtung, ob ein legitimierter Zugangscode von einem ID-Geber ausgesendet wird, um die Türen des Fahrzeugs 1 zu öffnen. Sollte kein Zugangscode empfangen werden, was in Schritt 113 festgestellt wird, geht das Verfahren zurück zu Schritt 112 und setzt die Überprüfung zyklisch fort, bis ein Zugangscode empfangen wird, was in Schritt 114 festgestellt wird. Von Schritt 114 geht es dann in dem Verfahren zu Schritt 115, wo die Lichtverhältnisse des Außenbereichs überprüft werden. Sollte es dunkel sein, was in Schritt 116 festgestellt wird, so wird in Schritt 118 die Kameraeinheit 8 in die Komfortposition bewegt, in welcher die Schutzklappe 6 geöffnet ist, und die Lichtquelle 44 angestellt. Sollte es hingegen hell sein, was in Schritt 117 festgestellt wird, so wird der Schritt 118 des Verfahrens übersprungen. Somit folgt entweder dem Schritt 117 oder dem Schritt 118 der Schritt 119, bei dem der Annäherungssensor 46 eingeschaltet wird, um ein Körperteil eines Benutzers zu detektieren. Nach dem Einschalten des Annäherungssensors 46 wird in Schritt 120 eine Zeitmessung (Timer) eingeschaltet. In Schritt 121 wird dann überprüft, ob ein Körperteil eines Benutzers in die Nähe des Annäherungssensors 46 geführt wird. Sollte dies nicht der Fall sein, was in Schritt 123 festgestellt wird, so wird in Schritt 124 überprüft, ob ein vorgegebenes Zeitintervall überschritten ist. Sollte das Zeitintervall überschritten sein, was in Schritt 126 festgestellt wird, so geht das Verfahren zu Schritt 127 über, in welchem der Annäherungssensor 46 und ggf. die Lichtquelle 44 ausgestellt werden und die Schutzklappe 6 wieder in ihre Schließstellung zurückbewegt wird, bevor es zu Schritt 112 geht. Sollte das vorgegebene Zeitintervall hingegen nicht überschritten sein, was in Schritt 125 festgestellt wird, so geht es mit Schritt 121 weiter. Stellt das Verfahren in Schritt 122 fest, dass ein Körperteil in die Nähe des Annäherungssensors 46 geführt wird, so wechselt das Verfahren zu Schritt 128, in welchem das Firmenemblem 45 beleuchtet wird, um dem Benutz optisch zu zeigen, dass die Annäherung von der Anordnung erkannt wurde. Es geht dann weiter zu Schritt 129, in welchem ein weiterer Timer eingeschaltet wird. In dem darauf folgenden Schritt 130 wird dann überprüft, ob das Körperteil noch in der Nähe ist. Sollte dies nicht der Fall sein, was in Schritt 132 festgestellt wird, so wechselt das Verfahren zu Schritt 127, was vorstehend bereits beschrieben wurde, bevor es dann zu Schritt 112 geht. Sollte hingegen in Schritt 131 festgestellt werden, dass das Körperteil sich nach wie vor in der Nähe des Annäherungssensors 46 befindet, so wird ein weiteres vorgegebenes Zeitintervall in Schritt 133 überprüft. Sollte das weitere vorgegebene Zeitintervall noch nicht erreicht sein, was in Schritt 135 ermittelt wird, geht es zurück zu Schritt 133. Sollte hingegen das Körperteil für das weitere vorgegebene Zeitintervall in Nähe des Annäherungssensors 46 angeordnet gewesen sein, was in Schritt 134 ermittelt wird, so wechselt das Verfahren zu Schritt 136, in welchem das Firmenemblem zyklisch beleuchtet wird, so dass es blinkt. Es geht nach Schritt 136 weiter in Schritt 137, in welchem ein weiterer Timer gestartet wird. Es wird wiederum überprüft, ob das Körperteil des Benutzers in Nähe des Annäherungssensors 46 ist, was in Schritt 138 erfolgt. Sollte das Körperteil nicht mehr in der Nähe sein, was in Schritt 139 ermittelt wird, so wird in dem nachfolgenden Schritt 141 der Annäherungssensor 46 und die Lichtquelle 44 ausgestellt, die Schutzklappe 6 zugefahren und die Klappe 2 des Fahrzeugs 1 geöffnet. Sollte das Körperteil hingegen noch in der Nähe des Annäherungssensors 46 sein, was auf eine eher zufällig und nicht gewollte Annäherung hindeutet, wird dies in Schritt 140 erkannt. In dem nachfolgenden Schritt 141 wird dann überprüft, ob diese Situation für das weitere vorgegebene Zeitintervall vorliegt. Sollte dies nicht der Fall sein, wechselt das Verfahren über Schritt 144 zu dem vorherigen Schritt 138. Sollte hingegen das weitere vorgegebene Zeitintervall überschritten sein, was in Schritt 145 festgestellt wird, wechselt das Verfahren zu Schritt 127, wie vorstehend bereits beschrieben.

Die vorstehende Verfahrensführung bezieht sich auf den Fall des Stillstandes des Fahrzeugs. Wenn das Fahrzeug 1 hingegen in Bewegung ist, was das Verfahren in Schritt 150 festgestellt hat, fährt es fort mit dem Schritt 200, was nachstehend mit Bezug auf Figur 21 näher erläutert wird. In Schritt 200 überprüft das Verfahren, ob ein Rückwärtsgang eingelegt ist. Sollte dies nicht der Fall sein, was in Schritt 220 festgestellt wird, wechselt das Verfahren zu Schritt 300, was weiter unten mit Bezug auf die Figuren 22 und 23 beschrieben wird. Wenn allerdings in Schritt 210 festgestellt wird, dass ein Rückwärtsgang eingelegt ist, wird die Kameraeinheit 8 in Schritt 220 in die Aktivposition (siehe Figur 16) gefahren und im anschließenden Schritt 230 erfolgt die Bildübertragung in das Fahrzeuginnere. Der nachfolgende Schritt 240 steht für die aus dem Stand der Technik bekannten Verfahrensführungen in diesem Fall, so dass auf weitere Erläuterungen verzichtet wird.

Wenn hingegen das Fahrzeug in Bewegung ist und kein Rückwärtsgang eingelegt ist, was in Schritt 220 ermittelt wurde, geht das Verfahren über zu Schritt 300. Für den Schritt 300 und seine nachfolgenden Verfahrensschritte zeigt Figur 22 einen möglichen Verfahrensablauf, wohingegen Figur 23 eine Alternative zu dem in Figur 22 dargestellten Verfahrenszug gibt.

Mit Bezug auf Figur 22 wird nach Schritt 300 in Schritt 310 die Kameraeinheit 8 in die Kollisionsüberwachungsposition zum Filmen des (nachfolgenden oder vorausfahrenden) Verkehrs verfahren. Es startet nach dem Verfahren der Kameraeinheit 8 due Bildaufnahme und/oder die Bildanzeige des gefilmten Bereichs in Schritt 311. In Schritt 312 wird dann überprüft, ob das Fahrzeug 1 wieder abgestellt wird. Sollte es nicht abgestellt sein, was in Schritt 313 ermittelt wird, geht das Verfahren zurück zu Schritt 312 und es wird weiter gefilmt. Sollte das Fahrzeug 1 hingegen tatsächlich abgestellt worden sein, wird dies in Schritt 314 ermittelt, woraufhin in Schritt 315 die Kameraeinheit 8 in die Ruheposition verfahren wird und das Verfahren zu Schritt 100 zurückkehrt.

In Figur 23 ist ein Verfahrensschema dargestellt, welches als Alternative zu dem in Figur 22 beschriebenen Verfahrenszug verwendet werden könnte. In Schritt 320 bleibt die Kameraeinheit 8 in der Ruheposition, wobei in Schritt 321 überprüft wird, ob eine Pre-Crash-Warnung vorliegt. Sollte dies nicht der Fall sein, was das Verfahren in Schritt 323 ermittelt, dann geht das Verfahren zu Schritt 321 zurück. Wenn jedoch in Schritt 322 festgestellt wird, dass eine Pre-Crash-Warnung vorliegt, wird in Schritt 324 ein Timer eingeschaltet und im nachfolgenden Schritt 325 die Kameraeinheit 8 in die Kollisionsüberwachungsposition verfahren, wonach dann in Schritt 326 eine Speicherung des gefilmten Bildmaterials, beispielsweise in einer Blackbox, stattfindet, damit die Filmdaten zu einem späteren Zeitpunkt ausgewertet und ein möglicher Unfall rekonstruiert werden können. Anschließend wird in Schritt 327 das vom Timer gestartete Zeitintervall ausgewertet. Sollte ein vorgegebenes Zeitintervall noch nicht überschritten sein, was in Schritt 329 ermittelt wird, dann geht das Verfahren zurück zu Schritt 326. Sollte hingegen das vorgegebene Zeitintervall erreicht sein, was in Schritt 328 ermittelt wird, dann folgt der Verfahrensschritt 300, in welchem die Kameraeinheit 8 wieder in die Ruheposition verfahren wird, bevor das Verfahren dann zurück zu Schritt 321 wechselt.

## Patentansprüche

1. Kombination von einem Fahrzeug (1) und einer Anordnung (3) mit
einem Trägergehäuse (5), das in einem Durchbruch (4) einer Außenverkleidung des Fahrzeugs (1) angeordnet und dort befestigt ist und das eine Durchgangsöffnung (7) aufweist,
einer Antriebseinheit (20), die rückseitig an dem Trägergehäuse (5) angebracht ist,
einer bewegbar gelagerten Kameraeinheit (8), die mit Hilfe der Antriebseinheit (20) wenigstens zwischen einer zurückgezogenen Ruheposition und einer Aktivposition, in welcher zumindest das Objektiv (10) der Kameraeinheit (8) aus der Durchgangsöffnung (7) des Trägergehäuses (5) nach außen hervorsteht und zu der Bewegungsrichtung (19) der Kameraeinheit (8) geneigt ausgerichtet ist, bewegbar ist,
einer bewegbar an dem Trägergehäuse (5) gelagerten Schutzklappe (6), die zwischen einer Schließstellung, in welcher sie die Durchgangsöffnung (7) des Trägergehäuses (5) verschließt und in welcher die Kameraeinheit (8) von außen hinter der Schutzklappe (6) angeordnet ist, und einer Offenstellung, in welcher sie die Durchgangsöffnung (7) des Trägergehäuses (5) freigibt, bewegbar ist,
wobei ein mit der Antriebseinheit (20) bewegungsgekoppeltes Betätigungselement (33) vorgesehen ist, das bei Rückwärtsfahrt des Fahrzeugs (1) und in der Aktivposition der Kameraeinheit (8) die Schutzklappe (6) in ihre Offenstellung drängt,
**dadurch gekennzeichnet, dass**
die Kameraeinheit (8) bei Vorwärtsfahrt des Fahrzeugs (1) eine Kollisionsüberwachungsposition einnimmt, in welcher die Schutzklappe (6) in ihrer Schließstellung angeordnet ist und in welcher die Kameraeinheit (8) an einer in der Schutzklappe (6) ausgebildeten Überwachungsöffnung (36) zum Filmen des nachfolgenden oder vorausfahrenden Verkehrs angeordnet ist,
wobei das Objektiv (10) der Kameraeinheit (8) in der Kollisionsüberwachungsposition in Bewegungsrichtung der Kameraeinheit (8) horizontal ausgerichtet ist.

2. Kombination nach Anspruch 1, **dadurch gekennzeichnet, dass** die Kameraeinheit (8) ferner zwischen einer Einfahrposition und einer einer Vorfeldbeleuchtung des Fahrzeugs (1) dienenden Komfortposition, in welcher die Schutzklappe (6) in ihrer Offenstellung angeordnet ist, bewegbar ist, wobei die Kameraeinheit (8) in der Einfahrposition weiter von der Schutzklappe (6) entfernt angeordnet ist als in der Kollisionsüberwachungsposition, und wobei in der Komfortposition die Kameraeinheit (8) zwischen der Kollisionsüberwachungsposition und der Einfahrposition angeordnet ist.

3. Kombination nach Anspruch 2, **dadurch gekennzeichnet, dass** die Komfortposition von der Kameraeinheit (8) nur bei vorheriger Bewegung in die Einfahrposition einnehmbar ist.

4. Kombination nach einem der vorherigen Ansprüche, **dadurch gekennzeichnet, dass** das Betätigungselement (33) als ein Steuerzapfen (16) an der Kameraeinheit (8) ausgebildet ist und ein mit der Schutzklappe (6) in Wirkverbindung stehender und bewegbar am Trägergehäuse (5) gelagerter Stößel (28) eine erste Anlagefläche (34) aufweist, wobei bei einer Bewegung der Kameraeinheit (8) aus der Kollisionsüberwachungsposition in die Aktivposition der Steuerzapfen (16) an der ersten Anlagefläche (34) anliegt und die erste Anlagefläche (34) derart in Richtung der Durchgangsöffnung (7) drückt, dass der Stößel (28) die Schutzklappe (6) in ihre Offenstellung drängt.

5. Kombination nach Anspruch 4, **dadurch gekennzeichnet, dass** an dem der Schutzklappe (6) abgewandten Längsende des Stößels (28) ein Distanzstück (38) mit einer zweiten Anlagefläche(37) drehbar angebracht ist, wobei die zweite Anlagefläche (37) auf der der Schutzklappe (6) abgewandten Seite der ersten Anlagefläche (34) und in einem Abstand (40) zur ersten Anlagefläche (34) angeordnet ist, wobei in der Komfortposition und in der Einfahrposition das als Steuerzapfen (16) ausgebildete Betätigungselement (33) an der zweiten Anlagefläche (37) des Distanzstücks (38) anliegt und die zweite Anlagefläche (37) derart in Richtung der Durchgangsöffnung (7) drückt, dass der Stößel (28) die Schutzklappe (6) in ihre Offenstellung drängt.

6. Kombination nach Anspruch 5, **dadurch gekennzeichnet, dass** bei einer von der Schutzklappe (6) weg gerichteten Bewegung der Kameraeinheit (8) aus der Kollisionsüberwachungsposition in die Einfahrposition der Steuerzapfen (16) das Distanzstück (38) derart aus seinem Bewegungsweg drückt, dass der Steuerzapfen (16) an die der Schutzklappe (6) abgewandte Seite der zweiten Anlagefläche (37) gelangt und an dieser anliegt.

7. Kombination nach Anspruch 5 oder 6, **dadurch gekennzeichnet, dass** bei einer zu der Schutzklappe (6) hin gerichteten Bewegung der Kameraeinheit (8) aus der Komfortposition in die Kollisionsüberwachungsposition eine Gehäuseführung (42) einen an dem Distanzstück (38) angebrachten Rückstellzapfen (39) derart führt, dass sich die zweite Anlagefläche (37) des Distanzstücks (38) aus dem Bewegungsweg des Steuerzapfens (16) bewegt und der Steuerzapfen (16) in Anlage an die erste Anlagefläche (34) kommt.

8. Kombination nach einem der Ansprüche 5 bis 7, **dadurch gekennzeichnet, dass** eine Antriebsvorrichtung (60) mit dem Distanzstück (38) bewegungsgekoppelt ist und dessen zweite Anlagefläche (37) bei einer zu der Schutzklappe (6) hin gerichteten Bewegung der Kameraeinheit (8) aus der Komfortposition in die Kollisionsüberwachungsposition aus dem Bewegungsweg des Steuerzapfens (16) bewegt.

9. Kombination nach Anspruch 8, **dadurch gekennzeichnet, dass** die Antriebsvorrichtung (60) an dem Trägergehäuse (5) oder dem Kameragehäuse (11) angebracht ist und ein Koppelelement (61) die Antriebsvorrichtung (60) derart mit dem Distanzstück (38) verbindet, dass das Distanzstück (38) um einen Bewegungszapfen (30) des Stößels (28) verschwenkt werden kann.

10. Kombination nach Anspruch 8 oder 9, **dadurch gekennzeichnet, dass** die Antriebsvorrichtung (60), die ein Servomotor oder ein Hubmagnet sein kann, mit dem Betrieb der Antriebseinheit (20) der Kameraeinheit (8) steuerungsgekoppelt ist.

11. Kombination nach einem der vorhergehenden Ansprüche, **dadurch gekennzeichnet, dass** sich in Verlängerung der Durchgangsöffnung (7) ein an dem Trägergehäuse (5) angebrachtes Aufnahmegehäuse (15) erstreckt, in welchem die Kameraeinheit (8) zumindest zwischen ihrer Aktivposition und Ruheposition verfahrbar gelagert ist.

12. Kombination nach Anspruch 11, **dadurch gekennzeichnet, dass** die Kameraeinheit (8) wenigstens ein Zapfenelement (16) aufweist, welches in einer komplementären Führungsnut (17) in dem Aufnahmegehäuse (15) bewegungsgeführt ist.

13. Kombination nach einem der Ansprüche 2 bis 12, **dadurch gekennzeichnet, dass** die Ruheposition entweder der Kollisionsüberwachungsposition oder der Einfahrposition entspricht.

14. Kombination nach einem der Ansprüche 4 bis 13, **dadurch gekennzeichnet, dass** der Stößel (28) gegen die Kraft eines Federelements (32) in Richtung des Trägergehäuses (5) bewegbar ist.

15. Kombination nach einem der vorhergehenden Ansprüche, **dadurch gekennzeichnet, dass** die Schutzklappe (6) eine Leiterplatte (43) aufweist, die eine Lichtquelle (44) zur Vorfeldbeleuchtung in Offenstellung der Schutzklappe (6) und/oder zur Beleuchtung eines außenseitig an der Schutzklappe (6) angebrachten Fahrzeugfirmenemblems (45) aufweist.

## Claims

1. Combination of a vehicle (1) and an assembly (3) with
a carrier housing (5) which is arranged in an aperture (4) of an outer panelling of the vehicle (1) and is fastened there and comprises a through hole (7),
an actuator unit (20) which is applied to the rear of the carrier housing (5),
a movably borne camera unit (8) which by means of the actuator unit (20) is moveable at least between a retracted rest position and an active position in which at least the lens (10) of the camera unit (8) protrudes outwards from the through hole (7) of the carrier housing (5) and is aligned at an angle to the direction of movement (19) of the camera unit (8),
a protective lid (6), borne moveably on the carrier housing (5), wherein the protective lid (6) is moveable between a closing position in which it closes the through hole (7) of the carrier housing (5) and in which the camera unit (8) is arranged behind the protective lid (6) shown from the outside, and an open position in which the protective lid (6) uncovers the through hole (7),
wherein an operating element (33) movably connected to the actuating unit (20) is provided which when the vehicle (1) is travelling in reverse and in the active position of the camera unit (8) forces the protective lid (6) into its open position,
**characterised in that**
when the vehicle (1) is travelling forwards the camera unit (8) assumes a collision monitoring position in which the protective lid (6) is arranged in its closing position and in which the camera unit (8) is arranged in a monitoring opening (36) formed in the protective lid (6) for filming the following or preceding traffic,
wherein in the collision monitoring position the lens (10) of the camera unit (8) is horizontally aligned in the direction of movement of the camera unit (8).

2. Combination according to claim 1 **characterised in that** the camera unit (8) can also be moved between a retracted position and a comfort position for illuminating the area in front of the vehicle (1) in which the protective lid (6) is arranged in its open position, wherein in the retracted position the camera unit (8) is arranged further away from the protective lid (6) than in the collision monitoring position, and wherein in the comfort position the camera unit (8) is arranged between the collision monitoring position and the retracted position.

3. Combination according to claim 2 **characterised in that** the comfort position of the camera unit (8) can only be assumed in the case of prior movement into the retracted position.

4. Combination according to any one of the preceding claims **characterised in that** the operating element (33) is designed as a control pin (16) on the camera unit (8) and a plunger (28) in operative connection with the protective lid (6) and movably borne on the carrier housing (5) comprises a first contact surface (34), wherein when the camera unit (8) moves from the collision monitoring position into the active position the control pin (16) is in contact with the first contact surface (34) and presses the first contact surface (34) in the direction of the through hole (7) in such a way that the plunger (28) forces the protective lid (6) into its open position.

5. Combination according to claim 4 **characterised in that** on the longitudinal end of the plunger (28) facing away from the protective lid (6) a spacer (38) with a second contact surface (37) is rotatably arranged, wherein the second contact surface (37) is arranged on the side of the first contact surface (34) facing away from the protective lid (6) and at a distance (40) from the first contact surface (34), wherein in the comfort position and in the retracted position the operating element (33) in the form of a control pin (16) is in contact with the second contact surface (37) of the spacer (38) and presses the second contact surface (37) in the direction of the through hole (7) in such a way that the plunger (28) forces the protective lid (6) into its open position.

6. Combination according to claim 5 **characterised in that** during a movement of the camera unit (8) directed away from the protective lid (6) from the collision monitoring position into the retracted position the control pin (16) presses the spacer (38) out of its movement path in such a way that the control pin (16) reaches and comes into contact with the side of the second contact surface (37) facing away from the protective lid (6).

7. Combination according to claim 5 or 6 **characterised in that** during a movement of the camera unit (8) directed towards the protective lid (6) from the comfort position into the collision monitoring position a housing guide (42) guides a restoring pin (39) applied to the spacer (38) in such a way that the second contact surface (37) of the spacer (38) is moved out of the movement path of the control pin (16) and the control pin (16) comes into contact with the first contact surface (34).

8. Combination according to any one of claims 5 to 7 **characterised in that** an actuating device (60) is movably connected to the spacer (38) and during a movement of the camera unit (8) directed towards the protective lid (6) from the comfort position into the collision monitoring position moves its second contact surface (37) out of the movement path of the control pin (16).

9. Combination according to claim 8 **characterised in that** the actuating device (60) is applied to the carrier housing (5) or the camera housing (11) and a connecting element (61) connects the actuating device (60) to the spacer (38) in such a way that the spacer (38) can be pivoted about a movement pin (30) of the plunger (28).

10. Combination according to claim 8 or 9 **characterised in that** the actuating device (60), which can be a servo motor or a solenoid, is control-connected with the operation of the actuating unit (20) of the camera unit (8).

11. Combination according to any one of the preceding claims **characterised in that** a receiving housing (15) applied to the carrier housing (5) extends in prolongation of the through hole (7) in which the camera unit (8) is accommodated at least movably between its active position and rest position.

12. Combination according to claim 11 **characterised in that** the camera unit (8) comprises at least one pin element (16) which is movably guided in a complementary guide groove (17) in the receiving housing (15).

13. Combination according to any one of claims 2 to 12 **characterised in that** the rest position corresponds to either the collision monitoring position or the retracted position.

14. Combination according to any one of claims 4 to 13 **characterised in that** the plunger (28) is movable against the force of a spring element (32) in the direction of the carrier housing (5).

15. Combination according to any one of the preceding claims **characterised in that** the protective lid (6) comprises a circuit board (43) which has a light source (44) for front area illumination in the open position of the protective lid (6) and/or for illuminating a vehicle company emblem (45) applied on the outside of the protective lid (6).

## Revendications

1. Combinaison d'un véhicule (1) et d'un agencement (3) comportant :
un boîtier porteur (5) qui est disposé dans une percée (4) d'un revêtement extérieur du véhicule (1) et y est fixé et qui présente un orifice traversant (7),
une unité motrice (20) qui est installée à l'arrière du boîtier porteur (5),
une unité de caméra (8) à palier mobile qui est mobile à l'aide de l'unité motrice (20) au moins entre une position de repos en retrait et une position active dans laquelle du moins l'objectif (10) de l'unité de caméra (8) dépasse de l'orifice traversant (7) du boîtier porteur (5) vers l'extérieur et est orienté incliné par rapport au sens de mouvement (19) de l'unité de caméra (8),
un volet protecteur (6) s'appuyant de manière mobile au niveau du boîtier porteur (5) et qui est mobile entre une position de fermeture dans laquelle il ferme l'orifice traversant (7) du boîtier porteur (5) et dans laquelle l'unité de caméra (8) est disposée depuis l'extérieur derrière le volet protecteur (6) et une position d'ouverture dans laquelle il dégage l'orifice traversant (7),
étant prévu un élément d'actionnement (33) couplé au niveau mouvement à l'unité motrice (20) et qui, en cas de marche arrière du véhicule (1) et dans la position active de l'unité de caméra (8), pousse le volet protecteur (6) dans sa position d'ouverture,
**caractérisée en ce que**
l'unité de caméra (8), en cas de marche avant du véhicule (1), prend une position de surveillance de collision dans laquelle le volet protecteur (6) est disposé dans sa position de fermeture et dans laquelle l'unité de caméra (8) est disposée au niveau d'un orifice de surveillance (36) pratiqué dans le volet protecteur (6) pour filmer la circulation suivante et/ou précédente,
l'objectif (10) de l'unité de caméra (8) étant, dans la position de surveillance de collision, orienté horizontalement dans le sens de mouvement de l'unité de caméra (8).

2. Combinaison selon la revendication 1, **caractérisée en ce que** l'unité de caméra (8) est en outre mobile entre une position d'entrée et une position de confort servant à éclairer le champ avant du véhicule (1) dans laquelle le volet protecteur (6) est disposé dans sa position d'ouverture, l'unité de caméra (8) étant, dans la position d'entrée, plus éloignée du volet protecteur (6) que dans la position de surveillance de collision, sachant que, dans la position de confort, l'unité de caméra (8) est disposée entre la position de surveillance de collision et la position d'entrée.

3. Combinaison selon la revendication 2, **caractérisée en ce que** la position de confort ne peut être prise par l'unité de caméra (8) qu'en cas de mouvement préalable vers la position d'entrée.

4. Combinaison selon une des revendications précédentes, **caractérisée en ce que** l'élément d'actionnement (33) est réalisé sous forme d'un tourillon de commande (16) au niveau de l'unité de caméra (8) et qu'un poussoir (28) en liaison fonctionnelle avec le volet protecteur (6) et s'appuyant de manière mobile au niveau du boîtier porteur (5) présente une première surface d'appui (34), sachant que, lors d'un mouvement de l'unité de caméra (8) depuis la position de surveillance de collision vers la position active, le tourillon de commande (16) repose au niveau de la première surface d'appui (34) et que la première surface d'appui (34) appuie en direction de l'orifice traversant (7) de manière à ce que le poussoir (28) pousse le volet protecteur (6) dans sa position d'ouverture.

5. Combinaison selon la revendication 4, **caractérisée en ce que**, à l'extrémité longitudinale détournée du volet protecteur (6) du poussoir (28), un espaceur (38) comportant une seconde surface d'appui (37) est disposé de manière à pouvoir tourner, la seconde surface d'appui (37) étant disposée sur la face détournée du volet protecteur (6) de la première surface d'appui (34) et à une distance (40) de la première surface d'appui (34), sachant que, dans la position de confort et dans la position d'entrée, l'élément d'actionnement (33) réalisé sous forme d'un tourillon de commande (16) repose au niveau de la seconde surface d'appui (37) de l'espaceur (38) et pousse la seconde surface d'appui (37) en direction de l'orifice traversant (7) de manière à ce que le poussoir (28) pousse le volet protecteur (6) dans sa position d'ouverture.

6. Combinaison selon la revendication 5, **caractérisée en ce que**, dans le cas d'un mouvement de l'unité de caméra (8) s'éloignant du volet protecteur (6) depuis la position de surveillance de collision vers la position d'entrée, le tourillon de commande (16) pousse l'espaceur (38) hors de sa voie de mouvement de manière à ce que le tourillon de commande (16) arrive jusqu'à la face détournée du volet protecteur (6) de la seconde surface d'appui (37) et repose sur celle-ci.

7. Combinaison selon la revendication 5 ou 6, **caractérisée en ce que**, dans le cas d'un mouvement dirigé vers le volet protecteur (6) de l'unité de caméra (8) depuis la position de confort vers la position de surveillance de collision, un guide de boîtier (42) guide un tourillon de réinitialisation (39) installé au niveau de l'espaceur (38) de manière à ce que la seconde surface d'appui (37) de l'espaceur (38) sorte de la voix de mouvement du tourillon de commande (16) et à ce que le tourillon de commande (16) vienne en contact avec la première surface d'appui (34).

8. Combinaison selon une des revendications 5 à 7, **caractérisée en ce qu'**un dispositif moteur (60) est couplé au niveau mouvement à l'espaceur (38) et déplace sa seconde surface d'appui (37), dans le cas d'un mouvement dirigé vers le volet protecteur (6) de l'unité de caméra (8), de la position de confort vers la position de surveillance de collision hors de la voie de mouvement du tourillon de commande (16).

9. Combinaison selon la revendication 8, **caractérisée en ce que** le dispositif moteur (60) est installé au niveau du boîtier porteur (5) ou du boîtier de la caméra (11) et qu'un élément de couplage (61) connecte le dispositif moteur (60) à l'espaceur (38) de manière à ce que l'espaceur (38) puisse être pivoté autour d'un tourillon de déplacement (30) du poussoir (28).

10. Combinaison selon la revendication 8 ou 9, **caractérisée en ce que** le dispositif moteur (60), qui peut être un servomoteur ou un aimant élévateur, est couplé au niveau commande au fonctionnement de l'unité motrice (20) de l'unité de caméra (8).

11. Combinaison selon une des revendications précédentes, **caractérisée en ce qu'**un boîtier récepteur (15) installé au niveau du boîtier porteur (5) s'étend dans le prolongement de l'orifice traversant (7), dans lequel boîtier porteur l'unité de caméra (8) s'appuie de manière à être déplaçable du moins entre sa position active et sa position de repos.

12. Combinaison selon la revendication 11, **caractérisée en ce que** l'unité de caméra (8) présente au moins un élément en tourillon (16) qui est guidé au niveau mouvement dans une rainure de guidage complémentaire (17) du boîtier récepteur (15).

13. Combinaison selon une des revendications 2 à 12, **caractérisée en ce que** la position de repos correspond soit à la position de surveillance de collision, soit à la position d'entrée.

14. Combinaison selon une des revendications 4 à 13, **caractérisée en ce que** le poussoir (28) est mobile à l'encontre de la force d'un élément à ressort (32) en direction du boîtier porteur (5).

15. Combinaison selon une des revendications précédentes, **caractérisée en ce que** le volet protecteur (6) présente un circuit imprimé (43) qui présente une source lumineuse (44) pour l'éclairage du champ avant en position d'ouverture du volet protecteur (6) et/ou pour l'éclairage d'un emblème de société du véhicule (45) disposé au niveau du volet protecteur (6).
